# EUROPÄISCHE PATENTSCHRIFT

(11) **EP 2 349 604 B1**
(45) Veröffentlichungstag und Bekanntmachung des Hinweises auf die Patenterteilung: **28.11.2012**
(21) Anmeldenummer: 09827099.4
(22) Anmeldetag: 08.09.2009
(51) Int. Cl.: B21D 53/26, B21D 53/84, B21C 37/22, F02B 33/42, F04F 13/00

(54) **VERFAHREN ZUR HERSTELLUNG EINES ZELLENRADES**
METHOD FOR PRODUCING A CELLULAR WHEEL
PROCÉDÉ DE PRODUCTION D'UNE ROUE CELLULAIRE

(30) Priorität: 21.11.2008 EP 08020288; 27.04.2009 EP 09005819
(43) Veröffentlichungstag der Anmeldung: 03.08.2011
(73) Patentinhaber: MEC Lasertec AG, 5733 Leimbach (CH)
(72) Erfinder: MERZ, Karl, CH-5734 Reinach (CH)
(74) Vertreter: Wiedmer, Edwin
(86) Internationale Anmeldenummer: PCT/CH2009/000300
(87) Internationale Veröffentlichungsnummer: WO 2010/057319

(56) Entgegenhaltungen:
- DE-C- 937 407
- GB-A- 693 009
- GB-A- 920 908
- GB-A- 1 076 235
- US-A- 2 857 661

## Beschreibung

### TECHNISCHES GEBIET

Die vorliegende Erfindung betrifft ein Verfahren zur Herstellung eines Zellenrades aus Metall, mit einer symmetrisch zu einer Rotationsachse liegenden, zylindrischen Aussenhülse, einer konzentrisch zur Aussenhülse liegenden, gegebenenfalls auf einer zylindrischen Flanschhülse angeordneten, zylindrischen Innenhülse, mindestens einer zwischen Aussenhülse und Innenhülse konzentrisch zu diesen angeordneten zylindrischen Zwischenhülse, wobei zwischen Aussenhülse und Zwischenhülse und zwischen Zwischenhülse und Innenhülse, sowie bei mehr als einer Zwischenhülse zwischen aufeinanderfolgenden Zwischenhülsen, radial zur Rotationsachse ausgerichtete Lamellen angeordnet sind.

### STAND DER TECHNIK

Seit einigen Jahren zählt das Verfahren des Downsizing zu den Hauptthemen bei der Konstruktion von neuen, aufgeladenen Motoren. Mit Downsizing können der Kraftstoffverbrauch und damit die Abgasemissionen eines Fahrzeugs reduziert werden. In der heutigen Zeit werden diese Ziele immer wichtiger, da der hohe Energieverbrauch durch fossile Brennstoffe stark zur Luftverschmutzung beiträgt und immer härtere Gesetzgebungsmassnahmen die Automobilhersteller zum Handeln zwingen. Unter Downsizing versteht man die Substitution eines grossvolumigen Motors durch einen hubraumverkleinerten Motor. Dabei soll die Motorleistung durch Aufladung des Motor konstant gehalten werden. Das Ziel ist es, mit kleinvolumigen Motoren die gleichen Leistungswerte zu erreichen wie mit leistungsgleichen Saugmotoren. Neue Erkenntnisse auf dem Gebiet des Downsizing haben gezeigt, dass insbesondere bei sehr kleinen Ottomotoren mit einem Hubraum von 1 Liter oder weniger mit einer Druckwellenaufladung die besten Ergebnisse erzielt werden können.

Bei einem Druckwellenlader ist der Rotor als Zellenrad ausgebildet und wird von einem

Luft- und Abgasgehäuse mit einem gemeinsamen Mantel umschlossen. Die Entwicklung moderner Druckwellenlader zur Aufladung kleiner Motoren führt zu Zellenrädern mit einem Durchmesser in der Grössenordnung von 100 mm oder weniger. Zur Erzielung eines maximalen Zellenvolumens und auch zur Gewichtsreduktion werden Zellenwandstärken von 0,2 mm oder weniger angestrebt. Bei den hohen Abgaseintrittstemperaturen von gegen 1000 °C kommen als Werkstoffe für das Zellenrad praktisch nur hochwarmfeste Stähle und Legierungen in Frage. Die Herstellung dimensionsstabiler und hochpräziser Zellenräder mit geringer Zellenwandstärke ist heute noch kaum möglich oder aber mit erheblichen Mehrkosten verbunden.

Es ist schon vorgeschlagen worden, die Kammern eines Zellenrades aus aneinander gereihten und sich teilweise überlappenden, Z-förmigen Profilen zu bilden. Die Herstellung eines derartigen Zellenrades ist jedoch mit hohem zeitlichen Aufwand verbunden. Hinzu kommt, dass das Aneinanderreihen und positionsgenaue Fixieren von Z-Profilen kaum mit einer zur Einhaltung der geforderten Toleranzen ausreichenden Präzision durchführbar ist.

Es ist auch schon vorgeschlagen worden, ein Zellenrad aus einem Vollkörper durch Erodieren der einzelnen Zellen herzustellen. Mit diesem Verfahren ist es jedoch nicht möglich, Zellenwandstärken von 0,2 mm zu erreichen. Ein weiterer wesentlicher Nachteil des Erodierverfahrens sind die damit verbundenen, hohen Material- und Bearbeitungskosten.

Das Dokument DE 937 407C betrifft ein Verfahren zur Herstellung von Wärme austauscheinheiten, die aus Zellenrädern bestehen.

### DARSTELLUNG DER ERFINDUNG

Der Erfindung liegt die Aufgabe zu Grunde, ein Zellenrad der eingangs genannten Art unter Vermeidung der Nachteile des Standes der Technik einfach und kostengünstig mit der geforderten Präzision herzustellen. Ein weiteres Ziel der Erfindung ist die Schaffung eines Verfahrens zur Herstellung eines für den Einsatz in einem Druckwellenlader zur Aufladung von Verbrennungsmotoren, insbesondere zur Aufladung kleiner Ottomotoren mit einem Hubraum in der Grössenordnung von 1 Liter oder weniger, geeigneten Zellenrades. Insbesondere soll das Verfahren die kostengünstige Herstellung dimensionsstabiler und hochpräziser Zellenräder mit einer Zellenwandstärke von 0,2 mm oder weniger ermöglichen.

Zu einer ersten erfindungsgemässen Lösung der Aufgabe führt ein durch die folgenden, nacheinander auszuführenden Schritte gekennzeichnetes Verfahren:
(a1) Bereitstellen eines ersten Blechstreifens mit einer mindestens der Länge einer Umfanglinie der Innenhülse entsprechenden Länge und mit einer mindestens der Länge des Zellenrades entsprechenden Breite;
(b1) Setzen der Lamellen an vorgegebenen Stellen in vorgegebener Anzahl auf einer Seite des ersten Blechstreifens senkrecht zur Blechoberfläche und senkrecht zur Längsrichtung des ersten Blechstreifens und Verbinden der Lamellen mit dem ersten Blechstreifen durch Schweissen oder Löten;
(c1) Biegen des auf einer Seite mit den Lamellen bestückten ersten Blechstreifens und Verbinden der beiden Enden des Blechstreifens durch Schweissen oder Löten unter Bildung der Innenhülse; oder
(a2) Bereitstellen eines ersten Blechstreifens und Verbinden der beiden Enden des ersten Blechstreifens durch Schweissen oder Löten unter Bildung der Innenhülse, oder Bereitstellen einer rohrförmigen Hülse als Innenhülse;
(b2) Setzen der Lamellen an vorgegebenen Stellen in vorgegebener Anzahl in Axialebenen auf der Aussenseite der Innenhülse; -
(c2) Verbinden der Lamellen mit der Innenhülse durch Schweissen oder Löten;
(d1) Bereitstellen eines zweiten Blechstreifens mit einer mindestens der Länge einer Umfanglinie der ersten Zwischenhülse entsprechenden Länge und mit einer mindestens der Länge des Zellenrades entsprechenden Breite;
(e1) Setzen der Lamellen an vorgegebenen Stellen in vorgegebener Anzahl auf einer Seite des zweiten Blechstreifens senkrecht zur Blechoberfläche und senkrecht zur Längsrichtung des zweiten Blechstreifens und Verbinden der Lamellen mit dem zweiten Blechstreifen durch Schweissen oder Löten;
(f1) Biegen des auf einer Seite mit den Lamellen bestückten zweiten Blechstreifens und Verbinden der beiden Enden des zweiten Blechstreifens durch Schweissen oder Löten unter Bildung der ersten Zwischenhülse; oder
(d2) Bereitstellen eines zweiten Blechstreifens und Verbinden der beiden Enden des zweiten Blechstreifens durch Schweissen oder Löten unter Bildung der ersten Zwischenhülse, oder Bereitstellen einer rohrförmigen Hülse als Zwischenhülse;
(e2) Setzen der Lamellen an vorgegebenen Stellen in vorgegebener Anzahl in Axialebenen auf der Aussenseite der ersten Zwischenhülse;
(f2) Verbinden der Lamellen mit der ersten Zwischenhülse durch Schweissen oder Löten;
(g) Setzen der ersten Zwischenhülse und Verbinden der freien Enden der Lamellen der Innenhülse mit der ersten Zwischenhülse durch Schweissen oder Löten;
(h) gegebenenfalls Wiederholen der Schritte (d1)-(f1) oder (d2)-(f2) unter Bildung mindestens einer weiteren Zwischenhülse und Verbinden der freien Enden der Lamellen der ersten Zwischenhülse mit der zweiten Zwischenhülse, sowie bei mehr als zwei Zwischenhülsen Verbinden der freien Enden der Lamellen jeder vorangehenden Zwischenhülse mit der nachfolgenden Zwischenhülse durch Schweissen oder Löten;
(i) Setzen einer zu den Zwischenhülsen konzentrischen, rohrförmigen Hülse als Aussenhülse und Verbinden der freien Enden der Lamellen der äussersten Zwischenhülse mit der Aussenhülse durch Schweissen oder Löten.

Der erfindungswesentliche Kern der ersten Alternative des Verfahrens wird darin gesehen, dass jeweils ein zu einer Hülse zu biegender Blechstreifen oder eine rohrförmige Hülse auf einer Seite mit den Lamellen bestückt werden. Dadurch können beim Zusammenbau des Zellenrades die Lamellen jeder vorangehenden Hülse mit der jeweils nachfolgenden Hülse auf einfache Weise positionsgenau gesetzt und gefügt werden und lassen sich mit einfachen Mitteln radial ausrichten und mit der Aussenhülse zum fertigen Zellenrad verbinden. Das Verfahren ermöglicht auch auf einfache Weise ein Verbinden der Innenhülse mit einer Flanschhülse.

Zu einer zweiten erfindungsgemässen Lösung der Aufgabe führt ein durch die folgenden, nacheinander auszuführenden Schritte gekennzeichnetes Verfahren:
(a) Bereitstellen eines Blechstreifens mit einer mindestens der Länge einer Umfanglinie der Zwischenhülse entsprechenden Länge und mit einer mindestens der Länge des Zellenrades entsprechenden Breite;
(b) Setzen der Lamellen an vorgegebenen Stellen in vorgegebener Anzahl auf beiden Seiten des Blechstreifens senkrecht zur Blechoberfläche und senkrecht zur Längsrichtung des Blechstreifens und verbinden der Lamellen mit dem Blechstreifen durch Schweissen oder Löten;
(c) Biegen des auf beiden Seiten mit den Lamellen bestückten Blechstreifens und Verbinden der beiden Enden des Blechstreifens unter Bildung der Zwischenhülse,
(d) Setzen einer ersten, zur Zwischenhülse konzentrischen, rohrförmigen Hülse als Aussenhülse und einer zweiten, zur Zwischenhülse konzentrischen, rohrförmigen Hülse als Innenhülse und Verbinden der freien Enden der Lamellen mit der Aussenhülse bzw. der Innenhülse.

Der erfindungswesentliche Kern der zweiten Alternative des Verfahrens wird darin gesehen, dass ein Blechstreifen auf beiden Seiten mit den Lamellen bestückt und nachfolgend die beiden Enden des Blechstreifens verbunden werden. Damit sind sämtliche Lamellen einseitig bereits positionsgenau gesetzt und gefügt und lassen sich mit einfachen Mitteln radial ausrichten und mit der Aussen- bzw. der Innenhülse zum fertigen Zellenrad verbinden.

Das Verbinden der Lamellen mit den Blechstreifen, mit der Aussenhülse, mit der Innenhülse und/oder mit der Zwischenhülse wird bevorzugt durch Verschweissen der Teile mittels eines Laser- oder Elektronenstrahls durchgeführt.

Das Verbinden der Lamellen mit dem Blechstreifen, mit der Aussenhülse, mit der Innenhülse und/oder mit der Zwischenhülse kann aber auch durch Verlöten der Teile über eine Lötfahne in Form eines über die Länge der Lamellen verlaufenden, mit einem Lot beschichteten und umgebogenen Randstreifens durchgeführt werden.

Vor dem Setzen der Aussenhülse, der Innenhülse und der Zwischenhülse/n kann es erforderlich sein, die freien Enden der Lamellen mittels Schleifwalzen abzutragen, bis die freien Enden der Lamellen auf einem der Innenseite der Aussenhülse bzw. der Aussenseite der Innenhülse entsprechenden Zylindermantel liegen.

Zu einer dritten erfindungsgemässen Lösung der Aufgabe führt bei einer auf einer zylindrischen Flanschhülse angeordneten, zylindrischen Innenhülse ein durch die folgenden, nacheinander auszuführenden Schritte gekennzeichnetes Verfahren:
(a) Bereitstellen eines ersten Blechstreifens mit einer mindestens der Länge einer Umfanglinie der Innenhülse entsprechenden Länge und mit einer mindestens der Länge des Zellenrades entsprechenden Breite;
(b) Setzen der Lamellen an vorgegebenen Stellen-in vorgegebener Anzahl auf einer Seite des ersten Blechstreifens senkrecht zur Blechoberfläche und senkrecht zur Längsrichtung des ersten Blechstreifens und Verbinden der Lamellen mit dem ersten Blechstreifen durch Schweissen oder Löten;
(c) Verbinden eines ersten Endes des auf einer Seite mit den Lamellen bestückten ersten Blechstreifens mit der Flanschhülse durch Schweissen oder Löten, Aufrollen des ersten Blechstreifens auf die Flanschhülse, wobei, ausgehend von dem mit der Flanschhülse verbundenen ersten Ende, der erste Blechstreifen in regelmässigen

Abständen mit der Flanschhülse durch Schweissen oder Löten unter Bildung der Innenhülse verbunden wird;
(d) Bereitstellen eines zweiten Blechstreifens mit einer mindestens der Länge einer Umfanglinie der ersten Zwischenhülse entsprechenden Länge und mit einer mindestens der Länge des Zellenrades entsprechenden Breite;
(e) Setzen der Lamellen an vorgegebenen Stellen in vorgegebener Anzahl auf einer Seite des zweiten Blechstreifens senkrecht zur Blechoberfläche und senkrecht zur Längsrichtung des zweiten Blechstreifens und Verbinden der Lamellen mit dem zweiten Blechstreifen durch Schweissen oder Löten;
(f) Verbinden eines ersten Endes des auf einer Seite mit den Lamellen bestückten zweiten Blechstreifens mit einem freien Ende einer ersten Lamelle des die Innenhülse bildenden ersten Blechstreifens durch Schweissen oder Löten, Aufrollen des zweiten Blechstreifens auf die freien Enden der Lamellen der Innenhülse, wobei, ausgehend von dem mit dem freien Ende der ersten Lamelle der Innenhülse verbundenen ersten Ende, der zweite Blechstreifen in regelmässigen Abständen mit den freien Enden der Lamellen der Innenhülse durch Schweissen oder Löten unter Bildung der ersten Zwischenhülse verbunden wird;
(g) gegebenenfalls Wiederholen der Schritte (d)-(f) unter Bildung mindestens einer weiteren Zwischenhülse und Verbinden der freien Enden der Lamellen der ersten Zwischenhülse mit der zweiten Zwischenhülse, sowie bei mehr als zwei Zwischenhülsen Verbinden-der freien Enden der Lamellen jeder vorangehenden Zwischenhülse mit der nachfolgenden Zwischenhülse durch Schweissen oder Löten;
(h) Bereitstellen eines dritten Blechstreifens mit einer mindestens der Länge einer Umfanglinie der Aussenhülse entsprechenden Länge und mit einer mindestens der Länge des Zellenrades entsprechenden Breite;
(i) Verbinden eines ersten Endes des dritten Blechstreifens mit einem freien Ende einer ersten Lamelle des die äusserste Zwischenhülse bildenden ersten Blechstreifens durch Schweissen oder Löten, Aufrollen des dritten Blechstreifens auf die freien Enden der Lamellen der äussersten Zwischenhülse, wobei, ausgehend von dem mit dem freien Ende der ersten Lamelle der äussersten Zwischenhülse verbundenen ersten Ende, der dritte Blechstreifen in regelmässigen Abständen mit den freien Enden der Lamellen der äussersten Zwischenhülse durch Schweissen oder Löten unter Bildung der Aussenhülse verbunden wird.

Der erfindungswesentliche Kern der dritten Alternative des Verfahrens wird darin gesehen, dass die Blechstreifen mit einem Ende auf der Flanschhülse bzw. auf dem freien Ende einer ersten Lamelle eines darunterliegenden Blechstreifens fixiert und der Blechstreifen aufgerollt und schrittweise mit der Unterlage verbunden wird. Dadurch können die beim Verschweissen der freien Enden der Lamellen mit den Blechstreifen in den Blechstreifen auftretenden Zugspannungen, die letztlich zu einem Verzug innerhalb des Zellenrades und in der Folge zu einer unzulässigen Deformation des Zellenrades führen, wesentlich vermindert werden.

Das Setzen der Lamellen auf den Blechstreifen oder den rohrförmigen Hüllen wird bevorzugt mittels einer NC-gesteuerten Klemmeinrichtung durchgeführt.

Der Blechstreifen zum Setzen der Lamellen und Verbinden mit dem Blechstreifen kann gekrümmt eingespannt werden, wobei das Setzen der Lamellen auf der Seite des Blechstreifens mit der konvexen Krümmung durchgeführt wird.

Die Wandstärke der zur Herstellung des Zellenrades verwendeten Werkstoffe beträgt bevorzugt weniger als 0,5 mm, insbesondere weniger als 0,3 mm und insbesondere max. 0,2 mm.

Das mit dem erfindungsgemässen Verfahren hergestellte Zellenrad wird bevorzugt in einem Druckwellenlader zur Aufladung von Verbrennungsmotoren, insbesondere von Ottomotoren mit einem Hubraum von 1 Liter oder weniger verwendet.

### KURZE BESCHREIBUNG DER ZEICHNUNG

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: eine Seitenansicht eines Zellenrades für einen Druckwellenlader,
- Fig. 2: eine Schrägsicht auf die Stirnseite des Zellenrades von Fig. 1;
- Fig. 3: einen Schnitt senkrecht zur Rotationsachse des Zellenrades von Fig. 1 nach der Linie I-I;
- Fig. 4: eine Schrägsicht auf einen ebenen Blechstreifen mit auf diesem festgelegten Lamellen;
- Fig. 5: eine Draufsicht auf die in Fig. 4 gezeigte Lamellenanordnung;
- Fig. 6: einen Schnitt durch Fig. 5 nach der Linie II-II;
- Fig.7: die Anordnung von Fig. 6 mit auf beiden Seiten des Blechstreifens angeordneten Lamellen;
- Fig. 8: eine der Fig. 6 entsprechende Anordnung mit auf beiden Seiten des Blechstreifens gleichzeitig gesetzten Lamellen;
- Fig. 9: eine der Fig. 6 entsprechende Anordnung mit gekrümmtem Blechstreifen;
- Fig. 10: eine der Fig. 7 entsprechende Anordnung mit gekrümmtem Blechstreifen;
- Fig. 11: die Frontansicht eines beidseitig mit Lamellen bestückten und zu einer Zwischenhülse verschweissten Blechstreifens;
- Fig. 12: ein vergrössertes Detail des Bereichs X von Fig. 11;
- Fig. 13: eine Draufsicht auf die Anordnung von Fig. 11;
- Fig. 14: eine Schrägsicht auf die Anordnung von Fig. 11;
- Fig. 15: eine der Fig. 11 entsprechende Darstellung mit aufgesetzten Halterungen und eingesetztem Werkzeug;
- Fig. 16: ein vergrössertes Detail des Bereichs X von Fig. 15;
- Fig. 17: eine Draufsicht auf die Anordnung von Figur 15;
- Fig. 18: eine Schrägsicht auf die Anordnung von Figur 15;
- Fig. 19: eine der Fig. 11 entsprechende Anordnung mit eingesetztem Werkzeug und positionierten Schleifwalzen;
- Fig. 20: die in Fig. 11 gezeigte Anordnung mit eingesetzter Innen- und Aussenhülse beim Anschweissen der Lamellen;
- Fig. 21: vergrösserte Details der Bereiche X, Y, Z von Fig. 20 mit unterschiedlich ausgeführter Schweissnaht;
- Fig. 22: die in Fig. 21 gezeigte Anordnung mit eingesetztem Werkzeug und aufgesetztem Niederhalter,
- Fig. 23: ein vergrössertes Detail des Bereichs X von Fig. 22;
- Fig. 24: eine Schrägsicht auf die Anordnung von Fig. 22;
- Fig. 25: eine Seitenansicht des Zellrades von Fig. 20 mit aufgeschweisster Labyrinthdichtung;
- Fig. 26: ein vergrössertes Detail (Bereich X) der in Fig. 25 gezeigten Labyrinthdichtung im Querschnitt;
- Fig. 27: eine Frontsicht auf ein Zellenrad beim Beschneiden auf Endmass;
- Fig. 28: eine Schrägsicht auf die Anordnung von Fig. 27;
- Fig. 29: eine der Fig. 8 entsprechende Anordnung mit Lamellen mit Schweiss- oder Lötfahnen;
- Fig. 30: eine der Fig. 22 entsprechende Anordnung mit Lamellen mit Schweiss- oder Lötfahnen;
- Fig. 31: ein vergrössertes Detail des Bereichs X von Fig. 30;
- Fig. 32: eine Schrägsicht auf eine Innenhülse eines Zellenrades mit einem Teil gesetzter und gefügter Lamellen;
- Fig. 33: eine Schrägsicht auf eine der Fig. 32 entsprechende Anordnung während dem Verschweissen mit einer Flanschhülse;
- Fig. 34: einen Schnitt durch einen Teilbereich der Anordnung von Fig. 32 rechtwinklig zur Zellenradachse in vergrösserter Darstellung;
- Fig. 35: einen ersten Schnitt durch einen Teilbereich der Anordnung von Fig.33 rechtwinklig zur Zellenradachse in vergrösserter Darstellung;
- Fig. 36: einen zweiten Schnitt durch einen Teilbereich des Zellenrades von Fig.33 rechtwinklig zur Zellenradachse in vergrösserter Darstellung;
- Fig. 37: einen Längsschnitt durch die Anordnung von Fig. 33 mit eingesetztem Werkzeug und aufgeschobener Zwischenhülse;
- Fig. 38: einen Querschnitt durch einen Teil der Anordnung von Fig. 37 nach der Linie B-B in vergrösserter Darstellung;
- Fig. 39: den Querschnitt von Fig. 38 nach Setzen und Fügen weiterer Lamellen;
- Fig. 40: den Querschnitt von Fig. 39 mit aufgeschobener zweiter Zwischenhülse;
- Fig. 41: den Querschnitt von Fig. 40 nach Setzen und Fügen weiterer Lamellen;
- Fig. 42: eine Seitenansicht einer Flanschhülse beim Aufrollen eines ebenen Blechstreifens mit auf diesem festgelegten Lamellen auf die Flanschhülse;
- Fig. 43: die Frontansicht der Anordnung von Fig. 42;
- Fig. 44: eine Schrägsicht von oben auf die Anordnung von Fig. 42;
- Fig. 45: eine Seitenansicht entsprechend Fig. 42 beim Aufrollen eines zweiten ebenen Blechstreifens mit auf diesem festgelegten Lamellen auf die Flanschhülse;
- Fig. 46: die Frontansicht der Anordnung von Fig. 45;
- Fig. 47: eine Schrägsicht von oben auf die Anordnung von Fig. 45;
- Fig. 48: eine Seitenansicht entsprechend Fig. 45 beim Aufrollen eines dritten ebenen Blechstreifens;
- Fig. 49: die Frontansicht der Anordnung von Fig. 48;
- Fig. 50: eine Schrägsicht von oben auf die Anordnung von Fig. 48.

### BESCHREIBUNG BEVORZUGTER AUSFÜHRUNGSFORMEN

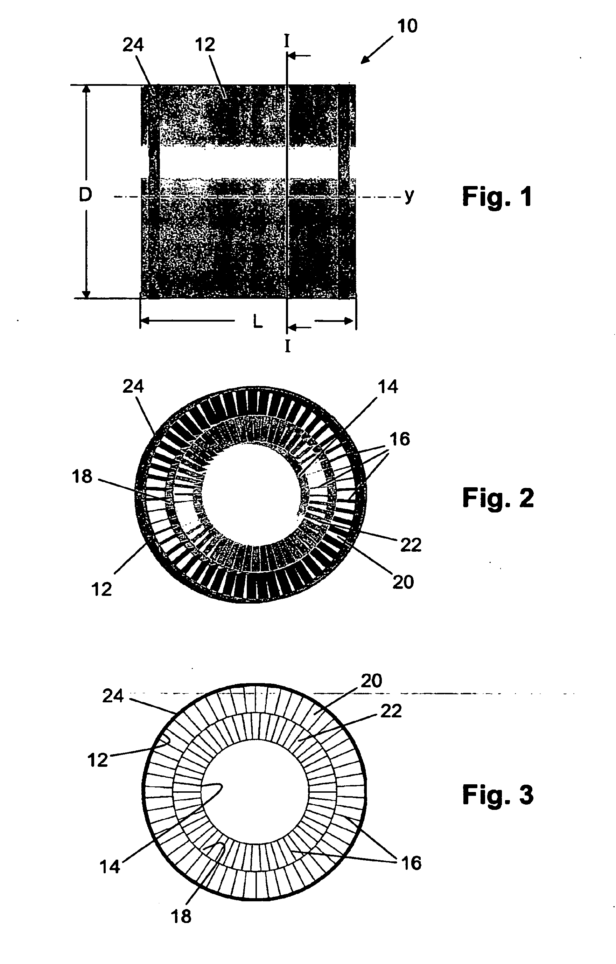

Ein in den Fig. 1 bis 3 gezeigtes Zellenrad 10 eines in der Zeichnung nicht dargestellten Druckwellenladers besteht aus einer symmetrisch zu einer Rotationsachse y des Zellenrades 10 liegenden, zylindrischen Aussenhülse 12, einer konzentrisch zur Aussenhülse 12 liegenden, zylindrischen Innenhülse 14 und einer zwischen der Aussenhülse 12 und der Innenhülse 14 konzentrisch zu diesen angeordneten Zwischenhülse 18. Der äussere ringförmige Raum zwischen der Zwischenhülse 18 und der Aussenhülse 12 und der innere ringförmige Raum zwischen der Zwischenhülse 18 und der Innenhülse 14 sind durch radial zur Rotationsachse y liegende ebene, streifenförmige Lamellen 16 in eine Vielzahl äussere Zellen 20 und gegenüber diesen drehversetzt angeordnete, innere Zellen 22 unterteilt. Das beispielhaft dargestellte Zellenrad 10 mit einem Durchmesser D und einer Länge L von z. B. je 100 mm weist 54 äussere Zellen 20 und 54 innere Zellen 22 auf. Die Aussenhülse 12, die Zwischenhülse 18, die Innenhülse 14 und die Lamellen 16 weisen eine einheitliche Wandstärke von z. B. 0,2 mm auf und bestehen aus einem hochwarmfesten metallischen Werkstoff, z. B. Inconel 2.4856. Die genannten Teile weisen in Richtung der Rotationsachse y eine gleiche Länge L entsprechend der Länge des Zellenrades 10 auf und erstrecken sich zwischen zwei senkrecht zur Rotationsachse y stehenden Stirnseiten des Zellenrades 10. Im Bereich der beiden Stirnseiten sind auf der Aussenhülse 12 umlaufende Profile 24 einer Labyrinthdichtung angeordnet. Die zur Bildung der Labyrinthdichtung erforderlichen Gegenprofile zu den Profilen 24 befinden sich an der Innenwand eines zur Lagerung des Zellenrades 10 vorgesehenen, in der Zeichnung nicht dargestellten Zellenradgehäuses.

In der nachfolgenden Beschreibung von Ausführungsbeispielen wird die Herstellung eines Zellenrades näher erläutert.

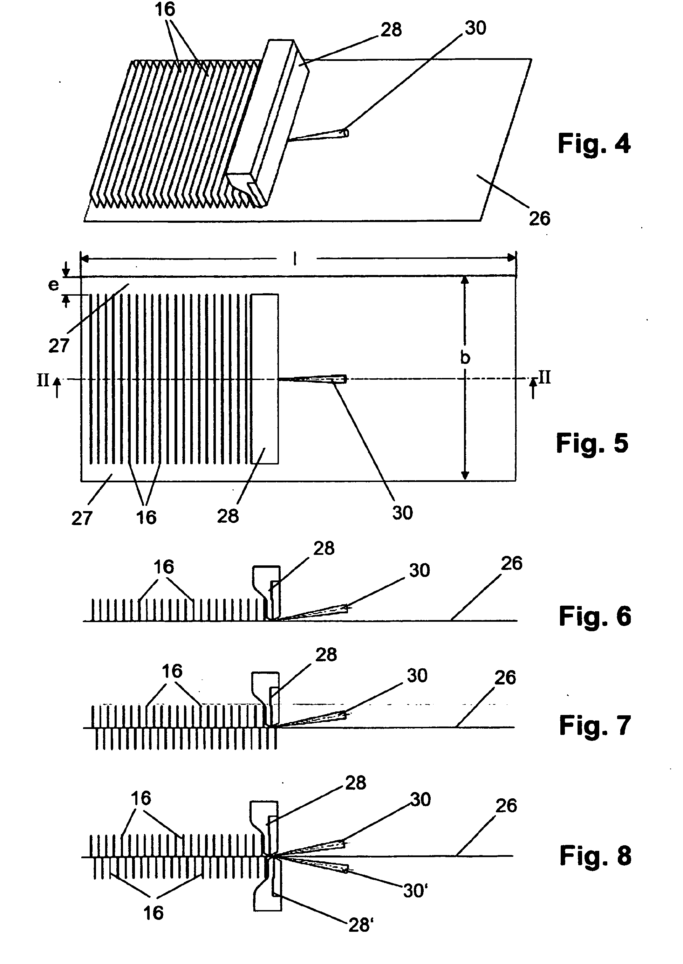

Wie aus den Fig. 4 bis 6 ersichtlich, wird ein Blechstreifen 26 einer Länge 1 und einer Breite b auf einem in der Zeichnung nicht dargestellten Werkzeugtisch eben eingespannt. Anschliessend werden Lamellen 16 von einer Zange 28 mittels einer NC-Steuerung einzeln parallel zu einander in einem vorgegebenen gegenseitigen Abstand senkrecht zur Ebene des Blechstreifens 26 auf dem Blechstreifen 26 positioniert, an diesen angedrückt und in dieser fixierten Lage entlang der Berührungslinie der Lamellen 16 mit der Oberfläche des Blechstreifens 26 mittels eines der Berührungslinie entlang geführten Laserstrahls 30 mit dem Blechstreifen 26 verschweisst. Die Anzahl der parallel zueinander stehenden Lamellen 16 und ihre Position auf dem Blechstreifen 26 entsprechen der Anordnung der Lamellen 16 zwischen der Zwischenhülse 18 und der Aussenhülse 12 des Zellrades 10. Wie in Fig. 5 erkennbar, erstrecken sich die hintereinander in Längsrichtung des Blechstreifens 26 aufgereihten Lamellen 16 nicht über die ganze Breite b des Blechstreifens 26, sondern lassen beidseitig einen freien Randstreifen 27 mit einem Übermass e von z. B. 5 mm. Nach erfolgter einseitiger Bestückung mit der vorgegebenen Anzahl Lamellen 16 (Fig. 6) wird der Blechstreifen 26 auf dem Werkzeugtisch gewendet, und die noch freie Oberfläche des Blechstreifens 26 wird, wie vorstehend beschrieben, mit Lamellen 16 bestückt (Fig. 7). Die Anzahl der Lamellen 16 und ihre Position auf dem Blechstreifen 26 entsprechen jetzt der Anordnung der Lamellen 16 zwischen der Zwischenhülse 18 und der Innenhülse 14 des Zellenrades 10.

Die Lamellen 16 werden üblicherweise vor dem Setzen von einem als Rollenware vorliegenden Blechstreifen auf die vorgegebene Länge geschnitten.

Bei einer in Fig. 8 dargestellten Variante des Verfahrens werden die Lamellen 16 auf beiden Seiten des Blechstreifens 26 mit zwei Zangen 28, 28' gleichzeitig gesetzt und gleichzeitig mittels je eines NC-gesteuerten Laserstrahls 30, 30' mit dem Blechstreifen 26 verschweisst.

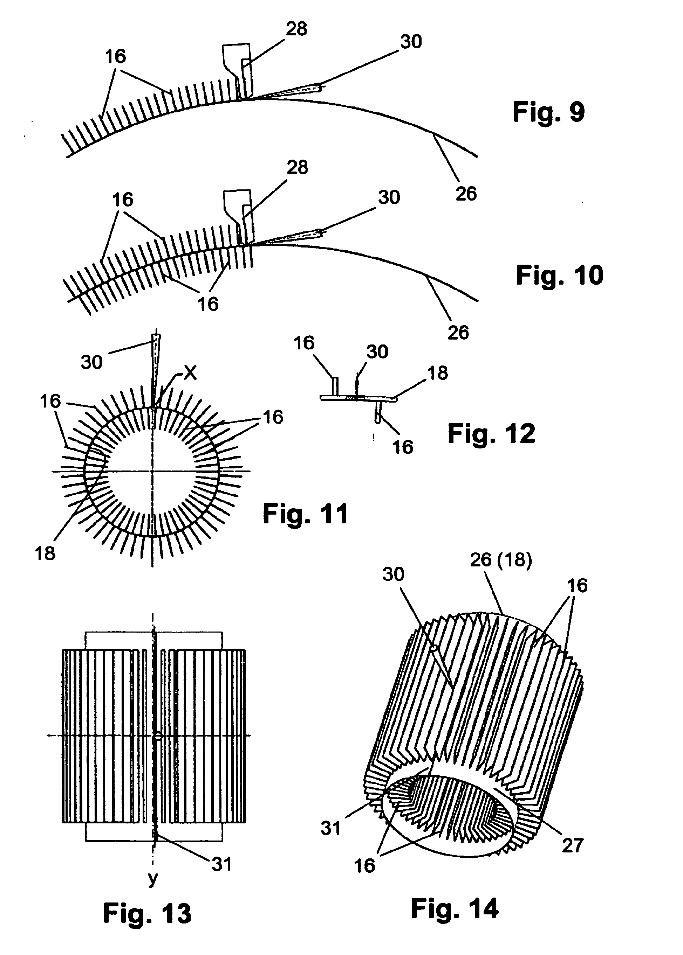

Bei einer weiteren, in den Fig. 9 und 10 wiedergegebenen Variante des in den Fig. 6 und 7 dargestellten Verfahrens wird der Blechstreifen 26 auf dem Werkzeugtisch mit einer Krümmung eingespannt. Das Setzen der Lamellen 16 auf dem Blechstreifen 26 erfolgt auf der konvex gekrümmten Fläche. Durch die Krümmung des Blechstreifens 26 ergibt sich ein verbesserter Zugang des Laserstrahls 30 zu der zu verschweissenden Berührungslinie zwischen Blechstreifen 26 und Lamelle 16 sowie eine grössere Freiheit bei der Führung des Laserstrahls 30. Nach erfolgter Bestückung des Blechstreifens 26 mit der vorgegebenen Anzahl Lamellen 16 wird der einseitig mit den Lamellen 16 versehene Blechstreifen 26 auf dem Werkzeugtisch gewendet und wiederum mit einer Krümmung auf dem Werkstücktisch fixiert, wobei sich nun die bereits gesetzten Lamellen 16 auf der konkaven Seite der Krümmung befinden. Nun erfolgt das Setzen der vorgegebenen Anzahl Lamellen 16 auf der freien, jetzt konvex gekrümmten Seite des Blechstreifens 26, wie vorstehend beschrieben.

Der beidseitig mit Lamellen 16 bestückte Blechstreifen 26 wird nun, wie in den Fig. 11 bis 14 dargestellt, über einen Dorn zu einer Zylinderform gekrümmt. Hierbei treffen die freien Kanten des gegebenenfalls vorgängig auf Endmass geschnittenen Blechstreifens 26 stumpf aufeinander und werden in dieser Lage mittels eines entlang der Stosskante geführten Laserstrahls 30 unter Bildung einer Längsschweissnaht 31 verschweisst. Der zu einer Zylinderform gekrümmte und verschweisste Blechstreifen 26 entspricht der Zwischenhülse 18 des Zellenrades 10.

Vor Durchführung des Schweissvorgangs wird der zu einer Zylinderform gekrümmte Blechstreifen 26 mit radial nach innen und aussen abragenden Lamellen 16 von drei Halterungen 32 am äusseren Umfang gehalten und fixiert. Die über den Umfang verteilten Halterungen 32 sind mit der vorgegebenen Winkellage der Lamellen 16 entsprechenden Schlitzen 33 versehen, in welche die Lamellen 16 mit ihrem freien Ende beim Aufsetzen der Halterungen 32 eindringen und durch die keilförmig zulaufenden Schlitze 33 gegebenenfalls geringfügig gerichtet und positionsgenau fixiert werden. Die von der zylindrischen Zwischenhülse 18 nach innen abragenden Lamellen 16 werden über stirnseitig eingeführte Werkzeuge 34 mit einem zylindrischen Querschnitt mit von der Zylindermantelfläche radial nach innen gerichteten und gegebenenfalls konisch zulaufenden und der vorgegebenen Winkellage der Lamellen 16 entsprechenden Schlitzen fixiert.

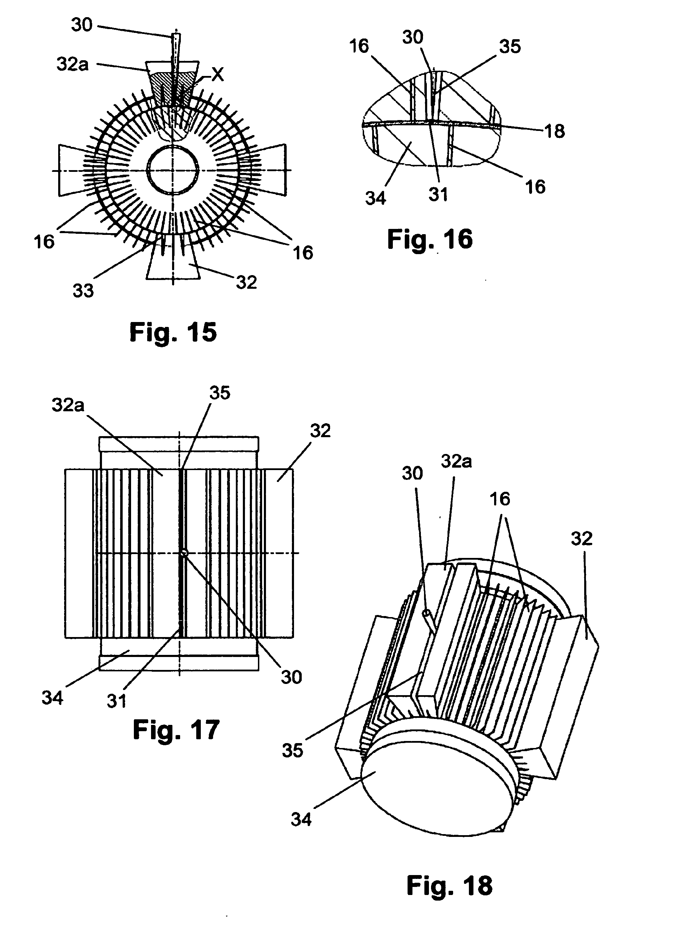

Die im Bereich der zu setzenden Schweissnaht angeordnete Halterung 32 a ist, wie in den Fig. 15 und 16 erkennbar, zweiteilig mit einem keilförmig zulaufenden, radial ausgerichteten Spalt 35 für den Laserstrahl 30 ausgestaltet und dient gleichzeitig als Niederhalter zum Andrücken des Blechstreifens 26 auf beiden Seiten der zu setzenden Schweissnaht gegen das von der Innenseite her stützende Werkzeug 34. Die auf diese Weise fixierten und an ihren Stosskanten miteinander fluchtenden Enden des Blechstreifens 26 werden nun mittels eines den Stosskanten entlang geführten Laserstrahls 30 unter Bildung einer Längsschweissnaht 31 verschweisst.

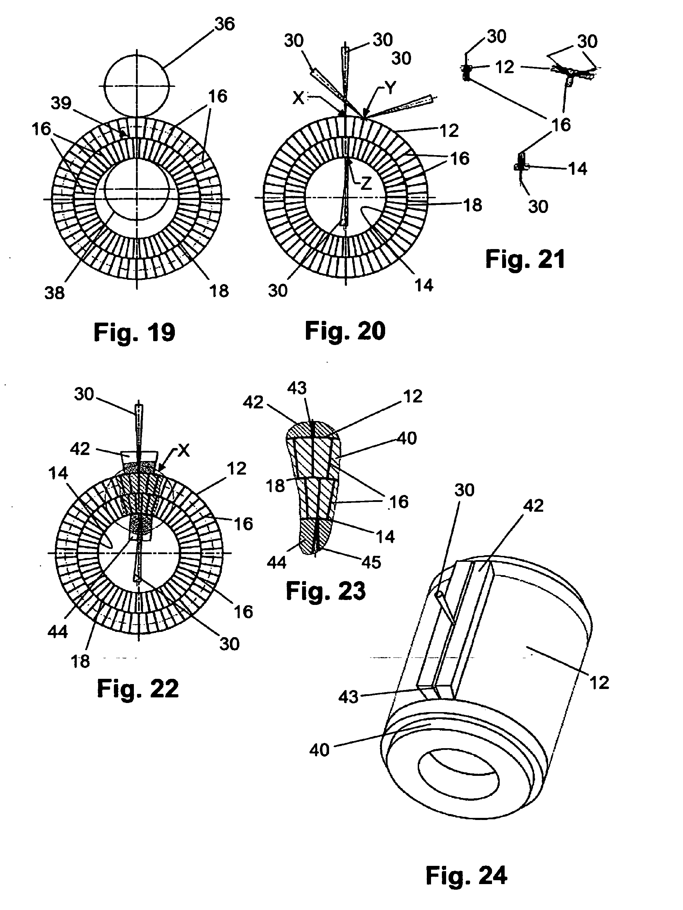

Für höchste Ansprüche kann es erforderlich sein, vor Positionierung der Aussenhülse 12 und der Innenhülse 14 mit einer äusseren Schleifwalze 36 und einer inneren Schleifwalze 38 die freien Enden der Lamellen 16 so abzutragen, dass diese auf einem der Innenseite der Aussenhülse 12 bzw. der Aussenseite der Innenhülse 14 entsprechenden Zylindermantel liegen. Die beiden Schleifwalzen 36, 38 sind parallel und in festem Abstand zu einander angeordnet. Während des Schleifvorgangs rotieren die beiden Schleifwalzen 36, 38 mit zueinander entgegengesetzter Drehrichtung und bilden einen Schleifspalt 39. Der zu der zylinderförmigen Zwischenhülse 18 verschweisste Blechstreifen 26 mit den beidseitig abragenden Lamellen 16 rotiert entgegen der Rotationsbewegung der beiden Schleifwalzen 36, 38 im Schleifwalzenspalt 39. Hierbei werden die nach aussen abragenden Lamellen 16 von der äusseren Schleifwalze 36 und die nach innen abragenden Lamellen 16 von der inneren Schleifwalze 38 bearbeitet, wobei die Achsen der Schleifwalzen 36, 38 und die Rotationsachse y des Zellenrades parallel zueinander in einer gemeinsamen Ebene liegen. Bei diesem Schleifvorgang werden die Lamellen 16 in ihrer vorgegebenen Position fixiert. Zu diesem Zweck greift ein Werkzeug 40 in Form eines Hohlzylinders mit von der Zylinderinnen- und -aussenwand radial nach innen gerichteten und gegebenenfalls konisch zulaufenden und der vorgegebenen Winkellage der Lamellen 16 entsprechenden Schlitzen zur Aufnahme und Fixierung der Lamellen 16 von einer Stirnseite her ein (siehe Fig. 22 bis 24). Die Lamellen 16 weisen gegenüber der inneren und äusseren Mantelfläche des Werkzeugs 40 ein geringes Übermass auf, welches beim Schleifen abgetragen wird, bis die freien Endkanten der Lamellen 16 mit der inneren und äusseren Mantelfläche des Werkzeugs 40 fluchten.

In einem nächsten, in den Fig. 20 bis 24 dargestellten Schritt werden die Aussenhülse 12 und die Innenhülse 14 in der Form rohrförmiger Hülsen von einer Stirnseite her auf- bzw. eingeschoben und an die äussere bzw. innere Mantelfläche des Werkzeugs 40 und damit auch an die freien Enden der im Werkzeug 40 fixierten Lamellen 16 angelegt. Nach dem Positionieren der Aussenhülse 12 und der Innenhülse 14 werden die freien Enden der Lamellen 16 entlang der Stosskanten mit der Aussenhülse 12 bzw. der Innenhülse 14 mittels eines jeder Stosskante entlang geführten Laserstrahls 30 verschweisst. Üblicherweise wird der Laserstrahl senkrecht zur Oberfläche der Aussen- bzw. Innenhülse 12, 14 geführt und dringt in radialer Richtung über die Stosskante in die radial ausgerichtete Lamelle 16 ein. Dies ist in den Fig. 20 und 21 durch die Schweissungen bei X und Z sowie in den Fig. 22 bis 24 dargestellt. Bei einer Schweissvariante Y werden zwei Laserstrahlen 30, 30' von entgegengesetzten Seiten in spitzem Winkel zur Oberfläche der Aussenhülse 12 gegeneinander und durch diese hindurch in das freie Ende der der Aussenhülse 12 über eine Stosskante anliegenden Lamelle 16 gerichtet. Wie aus den Fig. 22 bis 24 ersichtlich, werden zur Durchführung der Schweissungen zweiteilige Niederhalter 42, 44 eingesetzt, welche die Aussenhülse 12 bzw. die Innenhülse 14 auf beiden Seiten der zu setzenden Schweissnaht niederdrücken und damit einen guten Flächenkontakt mit der Stosskante der Lamelle 16 sicherstellen. Die Niederhalter sind mit einem mittigen, keilförmig zulaufenden und radial zur Rotationsachse y ausgerichteten Spalt 43, 45 für den Laserstrahl 30 ausgestattet.

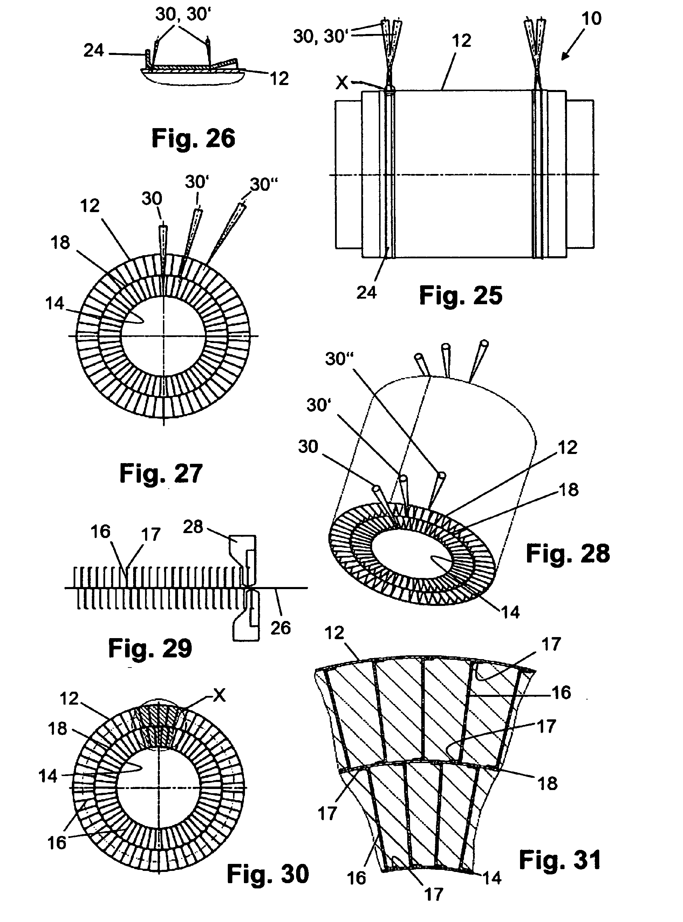

Die Fig. 25 und 26 zeigen ein Ausführungsbeispiel für im Bereich der beiden Stirnseiten des fertig gestellten Zellenrades 10 auf der Aussenhülse 12 ringförmig umlaufend angeordnete Profile 24 einer Labyrinthdichtung. Das Profil 24 wird mittels zweier Laserstrahlen 30, 30' über zwei umlaufende Schweissnähte mit der Aussenhülse 12 verbunden.

Bei der vorstehend beschriebenen Herstellung eines Zellenrades 10 werden Aussenhülse 12, Innenhülse 14 und Blechstreifen 26 bzw. Zwischenhülse 18 üblicherweise mit einem Übermass eingesetzt. Bei einer in den Fig. 27 und 28 dargestellten Endbearbeitung werden an den beiden Stirnseiten des Zellenrades 10 überstehende Ränder zur Erzeugung ebener Stirnflächen mittels Laserstrahlen 30, 30', 30" vom rotierenden Zellenrad 10 abgetrennt.

Die vorstehend beschriebenen Lamellen 16 sind streifenförmige, ebene Blechteile, welche über eine Stosskante senkrecht auf einer mit der Lamelle 16 zu verschweissenden, Zylindermantelfläche stehen. Zum Verbinden der beiden Teile wird ein Laserstrahl linear der Stosskante entlang geführt.

In den Fig. 29 bis 31 ist eine Variante der vorstehend beschriebenen Herstellung eines Zellenrades 10 beschrieben. Anstelle streifenförmiger, ebener Blechteile werden Lamellen 16 verwendet, bei denen mindestens eine der Längskanten aus der ebenen Lamellenfläche um einen Winkel von etwa 90° zu einer randständigen, streifenförmigen Schweiss- oder Lötfahne 17 einer Breite von etwa 3mm umgebogen ist. Die Lamellen 16 mit ein oder zwei Schweiss- oder Lötfahnen 17 können, wie vorstehend beschrieben, mittels Laser- oder Elektronenstrahlschweissen über die Schweiss- oder Lötfahnen 17 mit dem Blechteil 26, mit der Aussenhülse 12 und mit der Innenhülse 14 verbunden werden. Die Lamellen 16 können aber auch mit den genannten Teilen verlötet werden. Hierzu ist der zur Herstellung der Lamellen 16 vorgesehene Blechstreifen in Form von Rollenware im Randbereich mit einem Streifen Lot versehen. Nach dem Zuschneiden auf die Länge der Lamellen 16 werden die mit Lot beschichteten Randstreifen zu den Lötfahnen 17 umgebogen. Wie vorstehend anhand von Laserschweissungen dargestellt, erfolgt auch bei der Herstellung gelöteter Zellenräder 10 zunächst eine Bestückung eines Blechstreifens 26 mit den Lamellen 16, wobei mit dem Setzen jeder Lamelle 16 mittels der Zange 28 gleichzeitig ein Verlöten mit dem Blechstreifen 26 durch kurzzeitiges, schnelles Aufheizen der Lötfahne 17 über die Solidustemperatur des Lots beispielsweise über eine induktive Heizeinrichtung durchgeführt wird. Das Verlöten der Lötfahnen 17 mit der Aussenhülse 12 und mit der Innenhülse 14 kann nach dem positionsgenauen Ausrichten der Lamellen 16 in einem Ofen, z. B. in einem Banddurchlaufglühofen, durchgeführt werden. Es ist auch denkbar, zunächst die Lamellen 16 mittels Laser- oder Elektronenstrahlschweissen mit dem Blechstreifen 26 zu verbinden, wobei das mit dem Blechstreifen 26 zu verbindende freie Ende der Lamellen 16 mit oder ohne Schweissfahne 17 ausgebildet sein kann, und anschliessend das mit der Aussenhülse 12 und mit der Innenhülse 14 zu verbindende freie Ende der Lamellen 16 über eine mit Lot beschichtete Lötfahne 17 durchzuführen.

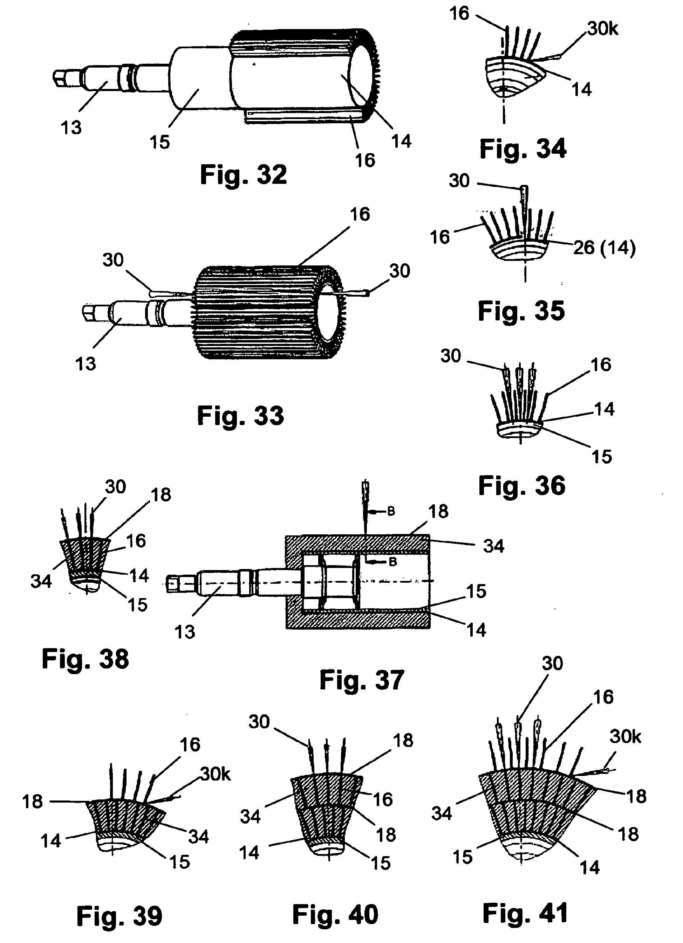

In den Fig. 32 bis 41 ist eine weitere Variante der vorstehend beschriebenen Herstellung eines Zellenrades 10 beschrieben. Der wesentliche Unterschied zu der vorhergehend beschriebenen Herstellungsart liegt darin, dass der Blechstreifen 26 nur einseitig mit den Lamellen 16 bestückt und nachfolgend zu einer Zylinderform gekrümmt wird, wobei auch eine vorgängig hergestellte Hülse mit den Lamellen 16 bestückt werden kann.

Fig. 32 und Fig. 34 zeigen die Bestückung einer vorgefertigten Innenhülse 14 mit den Lamellen 16. Hierbei werden die Lamellen 16 nacheinander gesetzt und mittels eines Laserstrahls 30k über eine Kehlnaht mit der Innenhülse 14 gefügt. Die Innenhülse 14 kann eine nahtlose Hülse oder ein zu einer rohrförmigen Hülse gekrümmter und entlang einer Stosskante unter Bildung einer Längsschweissnaht verschweisster Blechstreifen 26 sein.

Es kann auch zunächst ein Blechstreifen 26 einseitig mit den Lamellen 16 bestückt, anschliessend zu einer Zylinderform gekrümmt und an den Stosskanten zur Innenhülse 14 verschweisst werden (Fig. 35).

Wie aus Fig. 32 ersichtlich, wird die mit Lamellen 16 bestückte Innenhülse 14 auf eine mit einer Antriebswelle 13 verbundenen Flanschhülse 15 aufgeschoben.

In Fig. 33 erfolgt die Verbindung der Innenhülse 14 mit der Flanschhülse 15 durch Verschweissen der Stirnkanten von Innenhülse 14 und Flanschhülse 15 mittels Laserstrahlen 30. Bei der in Fig. 36 gezeigten Verbindungsart wird jeweils zwischen benachbarten Lamellen 16 die Innenhülse 14 mit der Flanschhülse 15 mittels eines Laserstrahls 30 unter Bildung einer Blindnaht verbunden.

Die Fig. 37 bis 41 zeigen den Aufbau eines Zellenrades mit zwei und mehr Zwischenhülsen 18.

Wie in den Fig. 37 bis 41 gezeigt, werden die von der Innenhülse 14 nach aussen abragenden Lamellen 16 über stirnseitig eingeführte Werkzeuge 34 in einer vorgegebenen Winkellage fixiert. Nach dem Aufschieben einer ersten Zwischenhülse 18 wird diese mittels eines Laserstrahls 30 über eine Blindnaht mit den freien Endkanten der darunterliegenden Lamellen 16 verschweisst (Fig. 37 und 38). Anschliessend wird die erste Zwischenhülse 18 mit weiteren Lamellen 16 bestückt. Die Lamellen 16 werden nacheinander gesetzt und mittels eines Laserstrahls 30k über eine Kehlnaht mit der Zwischenhülse 18 gefügt (Fig. 39). Wie vorstehend beschrieben, werden die Lamellen 16 wiederum über stirnseitig eingeführte Werkzeuge 34 in einer vorgegebenen Winkellage fixiert. Nach dem Aufschieben einer zweiten Zwischenhülse 18 wird auch diese mittels eines Laserstrahls 30 über eine Blindnaht mit den freien Endkanten der darunterliegenden Lamellen 16 verschweisst (Fig. 40). Anschliessend wird die zweite Zwischenhülse 18 mit weiteren Lamellen 16 bestückt. Die Lamellen 16 werden wiederum nacheinander gesetzt und mittels eines Laserstrahls 30k über eine Kehlnaht mit der Zwischenhülse 18 gefügt (Fig. 41). Auf gleiche Weise können eine oder mehrere weitere Zwischenhülsen 18 mit entsprechenden Lamellen 16 vorgesehen sein. Als äusserste Hülse des Zellenrades wird anstelle einer weiteren Zwischenhülse eine abschliessende Aussenhülse 12, wie vorstehend beschrieben, gesetzt und gefügt.

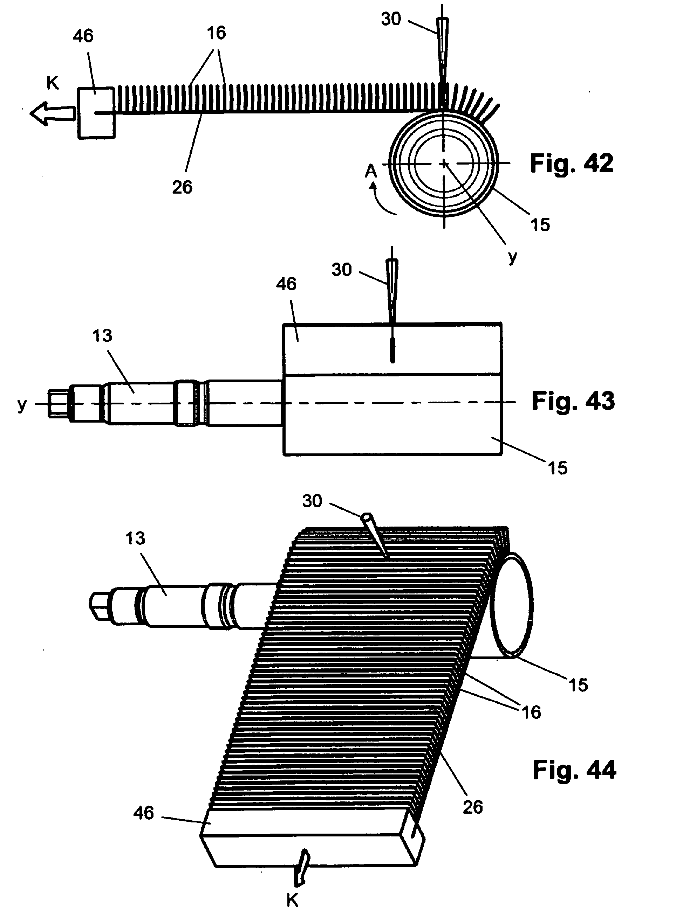

In den Fig. 42 bis 50 ist noch eine andere Variante der vorstehend beschriebenen Herstellung eines Zellenrades beschrieben. Der wesentliche Unterschied zu den vorhergehend beschriebenen Herstellungsarten liegt darin, dass die nur einseitig mit den Lamellen 16 bestückten Blechstreifen 26 unter Bildung der Innenhülse 14 und der Zwischenhülse/n 18 sowie ein abschliessender Blechstreifen 26 unter Bildung der Aussenhülse 12 nacheinander direkt auf die Flanschhülse 15 bzw. auf die freien Enden der Lamellen 16 der darunterliegenden, bereits aufgerollten Blechstreifen 26 aufgerollt und während des Aufrollens mit der Flanschhülse 15 bzw. mit den freien Enden der Lamellen 16 verbunden werden.

Wie in den Fig. 42 bis 44 gezeigt, wird ein Ende eines einseitig mit Lamellen 16 bestückten und im fertigen Zellenrad die Innenhülse 14 bildenden ersten Blechstreifens 26 mittels eines Laserstrahls 30 an die Flanschhülse 15 angeschweisst. Das andere Ende des Blechstreifens 26 ist in einer Klemmeinrichtung 46 eingespannt. Der einseitig an der Flanschhülse 15 fixierte erste Blechstreifen 26 wird über die Klemmeinrichtung 46 rechtwinklig zur Rotationsachse y der Flanschhülse 15 bzw. des Zellenrades mit einer Zugkraft K beaufschlagt und so gespannt, dass der einseitig mit den Lamellen 16 bestückte erste Blechstreifen 26 beim Drehen der Flanschhülse 15 um die Rotationsachse y in Pfeilrichtung A am Ort der vorzunehmenden Verschweissung der Flanschhülse 15 über die ganze Breite satt aufliegt. Grundsätzlich kann das Verschweissen des Blechstreifens 26 mit der Flanschhülse 15 nach jeweils einer gleichen Anzahl Lamellen 16 erfolgen, also z.B. nach jeder zweiten oder dritten Lamelle 16. Bevorzugt wird das Verschweissen jedoch zwischen allen Lamellen 16 durchgeführt, d. h. der parallel zu den Lamellen 16 geführte Laserstrahl 30 fährt zwischen benachbarten Lamellen 16 parallel zur Rotationsachse y in einer Richtung über die Breite des auf der Flanschhülse 15 aufliegenden Blechstreifens 26 und nach getakteter Drehung der Flanschhülse 15 um jeweils einen dem Lamellenabstand entsprechenden Teilungswinkel in entgegengesetzter Richtung zurück. Nach dem endgültigen Zuschnitt des Blechstreifens 26 auf die der Umfanglinie der Flanschhülse 15 entsprechende Länge wird das bis dahin in der Klemmeinrichtung 46 eingespannte Ende mit der Flanschhülse 15 und die beiden stirnseitigen Kanten miteinander unter Bildung der

Innenhülse 14 verschweisst.

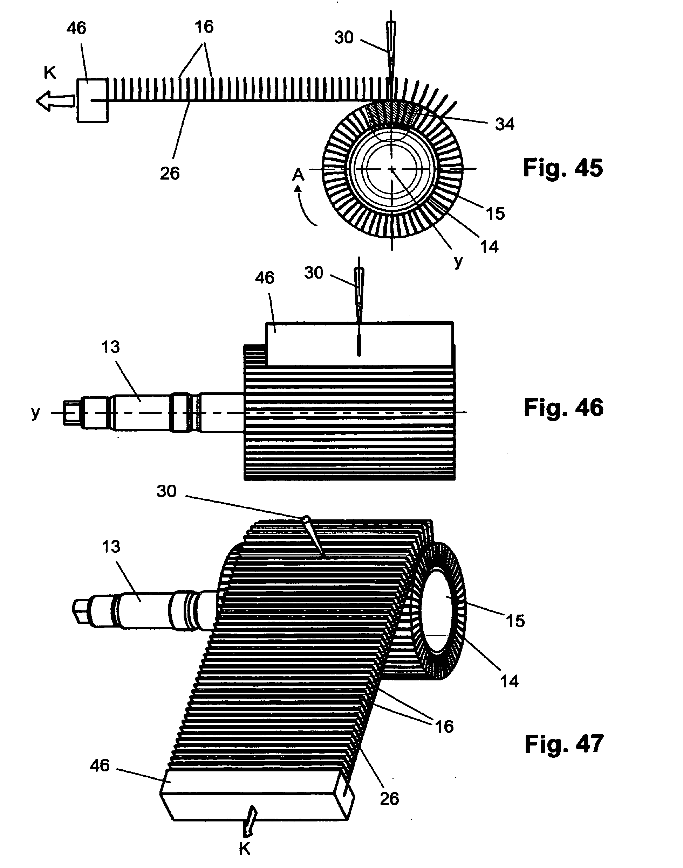

Wie in den Fig. 45 bis 47 gezeigt, wird ein Ende eines einseitig mit Lamellen 16 bestückten und im fertigen Zellenrad eine Zwischenhülse 18 bildenden zweiten Blechstreifens 26 mittels eines Laserstrahls 30 an das freie Ende einer Lamelle 16 des auf der Flanschhülse 15 angeordneten ersten Blechstreifens 26 angeschweisst. Das andere Ende des zweiten Blechstreifens 26 ist in der Klemmeinrichtung 46 eingespannt. Der einseitig an einem freien Ende einer ersten Lamelle 16 des ersten Blechstreifens 26 fixierte zweite Blechstreifen 26 wird über die Klemmeinrichtung 46 rechtwinklig zur Rotationsachse y der Flanschhülse 15 bzw. des Zellenrades mit einer Zugkraft K beaufschlagt und so gespannt, dass der einseitig mit den Lamellen 16 bestückte zweite Blechstreifen 26 beim Drehen der Flanschhülse 15 um die Rotationsachse y in Pfeilrichtung A am Ort der vorzunehmenden Verschweissung den freien Enden der Lamellen 16 des ersten Blechstreifens 26 über die ganze Länge der Lamellen 16 satt aufliegt. Der parallel zu den Lamellen 16 des zweiten Blechstreifens 26 geführte Laserstrahl 30 fährt zwischen benachbarten Lamellen 16 parallel zur Rotationsachse y in einer Richtung über die Breite des auf den freien Enden der Lamellen 16 des ersten Blechstreifens 26 aufliegenden zweiten Blechstreifens 26 und nach getakteter Drehung der Flanschhülse 15 um jeweils einen dem Lamellenabstand entsprechenden Teilungswinkel in entgegengesetzter Richtung zurück. Auf diese Weise werden nacheinander alle Lamellen 16 des ersten Blechstreifens über ihre freien Enden mit dem aufliegenden zweiten Blechstreifen 26 verschweisst. Nach dem endgültigen Zuschnitt des zweiten Blechstreifens 26 auf die der Umfanglinie der freien Enden der Lamellen 16 des ersten Blechstreifens 26 entsprechende Länge wird das bis dahin in der Klemmeinrichtung 46 eingespannte Ende mit den letzten freien Enden der darunterliegenden Lamellen -16 und die beiden stirnseitigen Kanten miteinander unter Bildung der Zwischenhülse 18 verschweisst. In der vorstehend beschriebenen Weise können weiter Zwischenhülsen 18 aufgebaut werden.

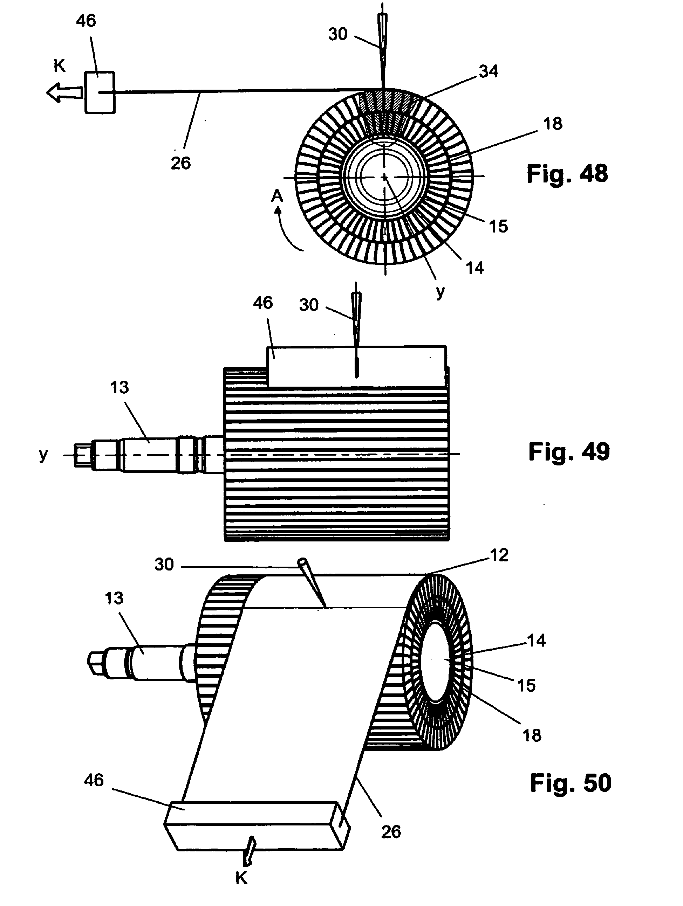

Wie in den Fig. 48 bis 50 gezeigt, wird ein Ende eines im fertigen Zellenrad eine abschliessende Aussenhülse 12 bildenden dritten Blechstreifens 26 mittels eines Laserstrahls 30 an das freie Ende einer Lamelle 16 des darunter liegenden des zweiten Blechstreifens 26 angeschweisst. Das andere Ende des dritten Blechstreifens 26 ist in der Klemmeinrichtung 46 eingespannt. Der einseitig am freien Ende einer ersten Lamelle 16 des zweiten Blechstreifens 26 fixierte dritte Blechstreifen 26 wird über die Klemmeinrichtung 46 rechtwinklig zur Rotationsachse y der Flanschhülse 15 bzw. des Zellenrades 10 mit einer Zugkraft K beaufschlagt und so gespannt, dass der dritte Blechstreifen 26 beim Drehen der Flanschhülse 15 um die Rotationsachse y in Pfeilrichtung A am Ort der vorzunehmenden Verschweissung den freien Enden der Lamellen 16 des zweiten Blechstreifens 26 über die ganze Länge der Lamellen 16 satt aufliegt. Der parallel zu den Lamellen 16 des zweiten Blechstreifens 26 geführte Laserstrahl 30 fährt über den freien Enden der Lamellen 16 des zweiten Blechstreifens 26 parallel zur Rotationsachse y in einer Richtung über die Breite des auf den freien Enden der Lamellen 16 des zweiten Blechstreifens 26 aufliegenden dritten Blechstreifens 26 und nach getakteter Drehung der Flanschhülse 15 um jeweils einen dem Lamellenabstand entsprechenden Teilungswinkel in entgegengesetzter Richtung zurück. Auf diese Weise werden nacheinander alle Lamellen 16 über ihre freien Enden mit dem aufliegenden dritten Blechstreifen 26 verschweisst. Nach dem endgültigen Zuschnitt des dritten Blechstreifens 26 auf die der Umfanglinie der freien Enden der Lamellen 16 des zweiten Blechstreifens 26 entsprechende Länge wird das bis dahin in der Klemmeinrichtung 46 eingespannte Ende mit den letzten freien Enden der darunterliegenden Lamellen 16 und die beiden stirnseitigen Kanten miteinander unter Bildung der Aussenhülse 18 verschweisst.

Die von den die Innenhülse 14 und die Zwischenhülse/n bildenden Blechstreifen 26 nach aussen abragenden Lamellen 16 werden vor dem Verschweissen der freien Enden mit einem aufliegenden Blechstreifen 26 analog zu den in den Fig. 37 bis 41 gezeigten Anordnungen über stirnseitig eingeführte Werkzeuge 34 in einer vorgegebenen Winkellage fixiert.

### BEZUGSZEICHENLISTE

- 10: Zellenrad
- 12: Aussenhülse
- 13: Antriebswelle
- 14: Innenhülse
- 15: Flanschhülse
- 16: Lamellen
- 17: Schweiss- oder Lötfahne
- 18: Zwischenhülse
- 20: äussere Zellen
- 22: innere Zellen
- 24: Labyrinthdichtungsteil
- 26: Blechstreifen
- 27: Randstreifen
- 28: Zange
- 30, 30', 30", 30k: Laserstrahl
- 32, 32 a: Halterungen
- 33: Schlitze
- 34: Werkzeug
- 35: Spalt
- 36: äussere Schleifwalze
- 38: innere Schleifwalze
- 39: Schleifwalzenspalt
- 40: Werkzeug
- 42: Niederhalter
- 43: Spalt
- 44: Niederhalter
- 45: Spalt
- 46: Klemmeinrichtung
- y: Rotationsachse
- K: Zugkraft

## Patentansprüche

1. Verfahren zur Herstellung eines Zellenrades (10) aus Metall, mit einer symmetrisch zu einer Rotationsachse (y) liegenden, zylindrischen Aussenhülse (12), einer konzentrisch zur Aussenhülse (12) liegenden, zylindrischen Innenhülse (14), mindestens einer zwischen Aussenhülse (12) und Innenhülse (14) konzentrisch zu diesen angeordneten zylindrischen Zwischenhülse (18), wobei zwischen Aussenhülse (12) und Zwischenhülse (18) und zwischen Zwischenhülse (18) und Innenhülse (14), sowie bei mehr als einer Zwischenhülse (18) zwischen aufeinanderfolgenden Zwischenhülsen (18), radial zur Rotationsachse (y) ausgerichtete Lamellen (16) angeordnet sind, **gekennzeichnet durch** die nacheinander durchzuführenden Schritte
(a1) Bereitstellen eines ersten Blechstreifens (26) mit einer mindestens der Länge einer Umfanglinie der Innenhülse (14) entsprechenden Länge (1) und mit einer mindestens der Länge (L) des Zellenrades (10) entsprechenden Breite (b);
(b1) Setzen der Lamellen (16) an vorgegebenen Stellen in vorgegebener Anzahl auf einer Seite des ersten Blechstreifens (26) senkrecht zur Blechoberfläche und senkrecht zur Längsrichtung des ersten Blechstreifens (26) und Verbinden der Lamellen (16) mit dem ersten Blechstreifen (26) **durch** Schweissen oder Löten;
(c1) Biegen des auf einer Seite mit den Lamellen (16) bestückten ersten Blechstreifens (26) und Verbinden der beiden Enden des Blechstreifens (26) durch Schweissen oder Löten unter Bildung der Innenhülse (14); oder
(a2) Bereitstellen eines ersten Blechstreifens (26) und Verbinden der beiden Enden des ersten Blechstreifens (26) **durch** Schweissen oder Löten unter Bildung der Innenhülse (14), oder Bereitstellen einer rohrförmigen Hülse als Innenhülse (14);
(b2) Setzen der Lamellen (16) an vorgegebenen Stellen in vorgegebener Anzahl in Axialebenen auf der Aussenseite der Innenhülse (14);
(c2) Verbinden der Lamellen (16) mit der Innenhülse (14) **durch** Schweissen oder Löten;
(d1) Bereitstellen eines zweiten Blechstreifens (26) mit einer mindestens der Länge einer Umfanglinie der ersten Zwischenhülse (18) entsprechenden Länge (1) und mit einer mindestens der Länge (L) des Zellenrades (10) entsprechenden Breite (b);
(e1) Setzen der Lamellen (16) an vorgegebenen Stellen in vorgegebener Anzahl auf einer Seite des zweiten Blechstreifens (26) senkrecht zur Blechoberfläche und senkrecht zur Längsrichtung des zweiten Blechstreifens (26) und Verbinden der Lamellen (16) mit dem zweiten Blechstreifen (26) **durch** Schweissen oder Löten;
(f1) Biegen des auf einer Seite mit den Lamellen (16) bestückten zweiten Blechstreifens (26) und Verbinden der beiden Enden des zweiten Blechstreifens (26) **durch** Schweissen oder Löten unter Bildung der ersten Zwischenhülse (18); oder
(d2) Bereitstellen eines zweiten Blechstreifens (26) und Verbinden der beiden Enden des zweiten Blechstreifens (26) **durch** Schweissen oder Löten unter Bildung der ersten Zwischenhülse (18), oder Bereitstellen einer rohrförmigen Hülse als Zwischenhülse (18);
(e2) Setzen der Lamellen (16) an vorgegebenen Stellen in vorgegebener Anzahl in Axialebenen auf der Aussenseite der ersten Zwischenhülse (18);
(f2) Verbinden der Lamellen (16) mit der ersten Zwischenhülse (18) **durch** Schweissen oder Löten;
(g) Setzen der ersten Zwischenhülse (18) und Verbinden der freien Enden der Lamellen (16) der Innenhülse (14) mit der ersten Zwischenhülse (18) **durch** Schweissen oder Löten;
(h) gegebenenfalls Wiederholen der Schritte (d1)-(f1) oder (d2)-(f2) unter Bildung mindestens einer weiteren Zwischenhülse (18) und Verbinden der freien Enden der Lamellen (16) der ersten Zwischenhülse (18) mit der zweiten Zwischenhülse (18), sowie bei mehr als zwei Zwischenhülsen (18) Verbinden der freien Enden der Lamellen (16) jeder vorangehenden Zwischenhülse (18) mit der nachfolgenden Zwischenhülse (18) **durch** Schweissen oder Löten;
(i) Setzen einer zu den Zwischenhülsen (18) konzentrischen, rohrförmigen Hülse als Aussenhülse (12) und Verbinden der freien Enden der Lamellen (16) der äussersten Zwischenhülse (18) mit der Aussenhülse (12) **durch** Schweissen oder Löten.

2. Verfahren zur Herstellung eines Zellenrades (10) aus Metall, mit einer symmetrisch zu einer Rotationsachse (y) liegenden, zylindrischen Aussenhülse (12), einer konzentrisch zur Aussenhülse (12) liegenden, zylindrischen Innenhülse (14), einer zwischen Aussenhülse (12) und Innenhülse (14) konzentrisch zu diesen angeordneten zylindrischen Zwischenhülse (18), wobei zwischen Aussenhülse (12) und Zwischenhülse (18) und zwischen Zwischenhülse (18) und Innenhülse (14) radial zur Rotationsachse (y) ausgerichtete Lamellen (16) angeordnet sind, **gekennzeichnet durch** die nacheinander durchzuführenden Schritte
(a) Bereitstellen eines Blechstreifens (26) mit einer mindestens der Länge einer Umfanglinie der Zwischenhülse (18) entsprechenden Länge (1) und mit einer mindestens der Länge (L) des Zellenrades (10) entsprechenden Breite (b);
(b) Setzen der Lamellen (16) an vorgegebenen Stellen in vorgegebener Anzahl auf beiden Seiten des Blechstreifens (26) senkrecht zur Blechoberfläche und senkrecht zur Längsrichtung des Blechstreifens (26) und Verbinden der Lamellen (16) mit dem Blechstreifen (26) **durch** Schweissen oder Löten;
(c) Biegen des auf beiden Seiten mit den Lamellen (16) bestückten Blechstreifens (26) und Verbinden der beiden Enden des Blechstreifens (26) durch Schweissen oder Löten unter Bildung der Zwischenhülse (18);
(d) Setzen einer ersten, zur Zwischenhülse (18) konzentrischen, rohrförmigen Hülse als Aussenhülse (12) und einer zweiten, zur Zwischenhülse (18) konzentrischen, rohrförmigen Hülse als Innenhülse (14) und Verbinden der freien Enden der Lamellen (16) mit der Aussenhülse (12) bzw. der Innenhülse (14) **durch** Schweissen oder Löten.

3. Verfahren nach Anspruch 1 oder 2, **dadurch gekennzeichnet, dass** vor dem Setzen der Aussenhülse (12), der Innenhülse (14) und der Zwischenhülse/n (18) die freien Enden der Lamellen (16) mittels Schleifwalzen (36, 38) abgetragen werden, bis die freien Enden der Lamellen (16) auf einem der Innenseite der Aussenhülse (12), der Aussenseite der Innenhülse (14) oder der Innenseite der Zwischenhülse/n (18) entsprechenden Zylindermantel liegen.

4. Verfahren nach einem der Ansprüche 1 bis 3, **dadurch gekennzeichnet, dass** das Verbinden der Lamellen (16) mit dem Blechstreifen (26), mit der Aussenhülse (12), mit der Innenhülse (14) und/oder mit der Zwischenhülse (18) durch Verlöten der Teile über eine Lötfahne (17) in Form eines über die Länge der Lamellen (16) verlaufenden, mit einem Lot beschichteten und umgebogenen Randstreifens durchgeführt wird.

5. Verfahren zur Herstellung eines Zellenrades (10) aus Metall, mit einer symmetrisch zu einer Rotationsachse (y) liegenden, zylindrischen Aussenhülse (12), einer konzentrisch zur Aussenhülse (12) liegenden, auf einer zylindrischen Flanschhülse (15) angeordneten, zylindrischen Innenhülse (14), mindestens einer zwischen Aussenhülse (12) und Innenhülse (14) konzentrisch zu diesen angeordneten zylindrischen Zwischenhülse (18), wobei zwischen Aussenhülse (12) und Zwischenhülse (18) und zwischen Zwischenhülse (18) und Innenhülse (14), sowie bei mehr als einer Zwischenhülse (18) zwischen aufeinanderfolgenden Zwischenhülsen (18), radial zur Rotationsachse (y) ausgerichtete Lamellen (16) angeordnet sind, **gekennzeichnet durch** die nacheinander durchzuführenden Schritte
(a) Bereitstellen eines ersten Blechstreifens (26) mit einer mindestens der Länge einer Umfanglinie der Innenhülse (14) entsprechenden Länge (1) und mit einer mindestens der Länge (L) des Zellenrades (10) entsprechenden Breite (b);
(b) Setzen der Lamellen (16) an vorgegebenen Stellen in vorgegebener Anzahl auf einer Seite des ersten Blechstreifens (26) senkrecht zur Blechoberfläche und senkrecht zur Längsrichtung des ersten Blechstreifens (26) und Verbinden der Lamellen (16) mit dem ersten Blechstreifen (26) **durch** Schweissen oder Löten;
(c) Verbinden eines ersten Endes des auf einer Seite mit den Lamellen (16) bestückten ersten Blechstreifens (26) mit der Flanschhülse (15) **durch** Schweissen oder Löten, Aufrollen des ersten Blechstreifens (26) auf die Flanschhülse (15), wobei, ausgehend von dem mit der Flanschhülse (15) verbundenen ersten Ende, der erste Blechstreifen (26) in regelmässigen Abständen mit der Flanschhülse (15) **durch** Schweissen oder Löten unter Bildung der Innenhülse (14) verbunden wird;
(d) Bereitstellen eines zweiten Blechstreifens (26) mit einer mindestens der Länge einer Umfanglinie der ersten Zwischenhülse (18) entsprechenden Länge (1) und mit einer mindestens der Länge (L) des Zellenrades (10) entsprechenden Breite (b);
(e) Setzen der Lamellen (16) an vorgegebenen Stellen in vorgegebener Anzahl auf einer Seite des zweiten Blechstreifens (26) senkrecht zur Blechoberfläche und senkrecht zur Längsrichtung des zweiten Blechstreifens (26) und Verbinden der Lamellen (16) mit dem zweiten Blechstreifen (26) **durch** Schweissen oder Löten;
(f) Verbinden eines ersten Endes des auf einer Seite mit den Lamellen (16) bestückten zweiten Blechstreifens (26) mit einem freien Ende einer ersten Lamelle (16) des die Innenhülse (14) bildenden ersten Blechstreifens (26) durch Schweissen oder Löten, Aufrollen des zweiten Blechstreifens (26) auf die freien Enden der Lamellen (16) der Innenhülse (14), wobei, ausgehend von dem mit dem freien Ende der ersten Lamelle (16) der Innenhülse (14) verbundenen ersten Ende, der zweite Blechstreifen (26) in regelmässigen Abständen mit den freien Enden der Lamellen (16) der Innenhülse (14) durch Schweissen oder Löten unter Bildung der ersten Zwischenhülse (18) verbunden wird;
(g) gegebenenfalls Wiederholen der Schritte (d)-(f) unter Bildung mindestens einer weiteren Zwischenhülse (18) und Verbinden der freien Enden der Lamellen (16) der ersten Zwischenhülse (18) mit der zweiten Zwischenhülse (18), sowie bei mehr als zwei Zwischenhülsen (18) Verbinden der freien Enden der Lamellen (16) jeder vorangehenden Zwischenhülse (18) mit der nachfolgenden Zwischenhülse (18) **durch** Schweissen oder Löten;
(h) Bereitstellen eines dritten Blechstreifens (26) mit einer mindestens der Länge einer Umfanglinie der Aussenhülse (12) entsprechenden Länge (1) und mit einer mindestens der Länge (L) des Zellenrades (10) entsprechenden Breite (b);
(i) Verbinden eines ersten Endes des dritten Blechstreifens (26) mit einem freien Ende einer ersten Lamelle (16) des die äusserste Zwischenhülse (18) bildenden ersten Blechstreifens (26) **durch** Schweissen oder Löten, Aufrollen des dritten Blechstreifens (26) auf die freien Enden der Lamellen (16) der äussersten Zwischenhülse (18), wobei, ausgehend von dem mit dem freien Ende der ersten Lamelle (16) der äussersten Zwischenhülse (18) verbundenen ersten Ende, der dritte Blechstreifen (26) in regelmässigen Abständen mit den freien Enden der Lamellen (16) der äussersten Zwischenhülse (18) **durch** Schweissen oder Löten unter Bildung der Aussenhülse (12) verbunden wird.

6. Verfahren nach einem der Ansprüche 1 bis 5, **dadurch gekennzeichnet, dass** das Verbinden der Lamellen (16) mit den Blechstreifen (26), mit der Aussenhülse (12), mit der Innenhülse (14) und/oder mit der Zwischenhülse (18) durch Verschweissen der Teile mittels eines Laser- oder Elektronenstrahls (30) durchgeführt wird.

7. Verfahren nach einem der Ansprüche 1 bis 6, **dadurch gekennzeichnet, dass** das Setzen der Lamellen (16) auf den Blechstreifen (26) mittels einer NC-gesteuerten Klemmeinrichtung (28) durchgeführt wird.

8. Verfahren nach einem der Ansprüche 1 bis 7, **dadurch gekennzeichnet, dass** der Blechstreifen (26) zum Setzen der Lamellen (16) und Verbinden mit dem Blechstreifen (26) gekrümmt eingespannt wird und das Setzen der Lamellen (16) auf der Seite des Blechstreifens (26) mit der konvexen Krümmung durchgeführt wird.

9. Verfahren nach einem der Ansprüche 1 bis 8, **dadurch gekennzeichnet, dass** die Wandstärke der zur Herstellung des Zellenrades verwendeten Werkstoffe weniger als 0,5 mm, insbesondere weniger als 0,3 mm, vorzugsweise max. 0,2 mm, beträgt.

## Claims

1. A method for producing a cellular wheel (10) made of metal, having a cylindrical outer sleeve (12) that lies symmetrically to an axis of rotation (y), a cylindrical inner sleeve (14) that lies concentrically to the outer sleeve (12), at least one cylindrical intermediate sleeve (18) that is arranged between outer sleeve (12) and inner sleeve (14) concentrically to said sleeves, wherein lamellas (16) that are aligned radially in relation to the axis of rotation (y) are arranged between outer sleeve (12) and intermediate sleeve (18) and between intermediate sleeve (18) and inner sleeve (14), as well as in the case of there being more than one intermediate sleeve (18) between consecutive intermediate sleeves (18), **characterized by** the steps that are to be executed consecutively:
(a1) prepare a first sheet metal strip (26) having a length (1) that corresponds at least to the length of a circumferential line of the inner sleeve (14) and having a width (b) that corresponds at least to the length (L) of the cellular wheel (10);
(b1) position the lamellas (16) at predetermined locations in predetermined quantities on one side of the first sheet metal strip (26) perpendicular to the sheet metal surface and perpendicular to the longitudinal direction of the first sheet metal strip (26) and connect the lamellas (16) to the first sheet metal strip (26) by welding or soldering;
(c1) bend the first sheet metal strip (26) provided on
one side with the lamellas (16) and connect the two ends of the sheet metal strip (26) by welding or soldering to form the inner sleeve (14); or
(a2) prepare a first sheet metal strip (26) and connect the two ends of the first sheet metal strip (26) by welding or soldering to form the inner sleeve (14), or prepare a tubular sleeve as inner sleeve (14);
(b2) position the lamellas (16) at predetermined
locations in predetermined quantities in axial planes on the outside of the inner sleeve (14);
(c2) connect the lamellas (16) to the inner sleeve (14) by welding or soldering;
(d1) prepare a second sheet metal strip (26) having a length (1) that corresponds at least to the length of a circumferential line of the first intermediate sleeve (18) and having a width (b) that corresponds at least to the length (L) of the cellular wheel (10);
(e1) position the lamellas (16) at predetermined locations in predetermined quantities on one side of the second sheet metal strip (26) perpendicular to the surface of the metal strip and perpendicular to the longitudinal direction of the second sheet metal strip (26) and connect the lamellas (16) to the second sheet metal strip (26) by welding or soldering;
(f1) bend the second sheet metal strip (26) provided with lamellas (16) on one side and connect the two ends of the second sheet metal strip (26) by welding or soldering to form the first intermediate sleeve (18); or
(d2) prepare a second sheet metal strip (26) and connect the two ends of the second sheet metal strip (26) by welding or soldering to form the first intermediate sleeve (18), or prepare a tubular sleeve as intermediate sleeve (18);
(e2) position the lamellas (16) at predetermined locations in predetermined quantities in axial planes on the outside of the first intermediate sleeve (18);
(f2) connect the lamellas (16) to the first intermediate sleeve (18) by welding or soldering;
(g) position the first intermediate sleeve (18) and connect the free ends of the lamellas (16) of the inner sleeve (14) to the first intermediate sleeve (18) by welding or soldering;
(h) where applicable, repeat steps (d1)-(f1) or (d2)-(f2) to form at least one further intermediate sleeve (18) and connect the free ends of the lamellas (16) of the first intermediate sleeve (18) to the second intermediate sleeve (18), and in the case of there being more than two intermediate sleeves (18) connect the free ends of the lamellas (16) of each preceding intermediate sleeve (18) to the subsequent intermediate sleeve (18) by welding or soldering;
(i) position a tubular sleeve that is concentric to the intermediate sleeves (18) as outer sleeve (12) and connect the free ends of the lamellas (16) of the outermost intermediate sleeve (18) to the outer sleeve (12) by welding or soldering.

2. The method for producing a cellular wheel (10) made of metal, having a cylindrical outer sleeve (12) that lies symmetrically to an axis of rotation (y), a cylindrical inner sleeve (14) that lies concentrically to the outer sleeve (12), a cylindrical intermediate sleeve (18) that is arranged between outer sleeve (12) and inner sleeve (14) concentrically to said sleeves, wherein lamellas (16) that are aligned radially in relation to the axis of rotation (y) are arranged between outer sleeve (12) and intermediate sleeve (18) and between intermediate sleeve (18) and inner sleeve (14), **characterized by** the steps that are to be executed consecutively:
(a) prepare a sheet metal strip (26) having a length (1) that corresponds at least to the length of a circumferential line of the intermediate sleeve (18) and having a width (b) that corresponds at least to the length (L) of the cellular wheel (10);
(b) position the lamellas (16) at predetermined locations in predetermined quantities, on both sides of the sheet metal strip (26) perpendicular to the sheet metal surface and perpendicular to the longitudinal direction of the sheet metal strip (26) and connect the lamellas (16) to the sheet metal strip (26) by welding or soldering;
(c) bend the sheet metal strip (26) provided on both sides with the lamellas (16) and connect the two ends of the sheet metal strip (26) by welding or soldering to form the inner sleeve (18);
(d) position a first tubular sleeve that is concentric to the intermediate sleeve (18) as outer sleeve (12) and a second tubular sleeve that is concentric to the intermediate sleeve (18) as inner sleeve (14) and connect the free ends of the lamellas (16) to the outer sleeve (12) or the inner sleeve (14) by welding or soldering.

3. The method as claimed in claim 1 or 2, **characterized in that** prior to positioning the outer sleeve (12), the inner sleeve (14) and the intermediate sleeve/sleeves (18), the free ends of the lamellas (16) are removed by means of grinding rolls (36, 38) until the free ends of the lamellas (16) are lying on a lateral cylinder surface that corresponds to the inside of the outer sleeve (12), the outside of the inner sleeve (14) or the inside of the intermediate sleeve/sleeves (18).

4. The method as claimed in one of claims 1 to 3, **characterized in that** the connecting of the lamellas (16) to the sheet metal strip (26), to the outer sleeve (12), to the inner sleeve (14) and/or to the intermediate sleeve (18) is carried out by soldering the parts via a soldering lug (17) in the form of a folded-over edge strip, which extends over the length of the lamellas (16) and is coated by a solder.

5. The method for producing a cellular wheel (10) made of metal, having a cylindrical outer sleeve (12) that lies symmetrically to an axis of rotation (y), a cylindrical inner sleeve (14) that lies concentrically to the outer sleeve (12) and is arranged on a cylindrical flange sleeve (15), at least one cylindrical intermediate sleeve (18) that is arranged between outer sleeve (12) and inner sleeve (14) concentrically to said sleeve, wherein lamellas (16) that are aligned radially in relation to the axis of rotation (y) are arranged between outer sleeve (12) and intermediate sleeve (18) and between intermediate sleeve (18) and inner sleeve (14), as well as in the case of there being more than one intermediate sleeve (18) between consecutive intermediate sleeves (18), **characterized by** the steps that are to be executed consecutively:
(a) prepare a first sheet metal strip (26) having a length (1) that corresponds at least to the length of a circumferential line of the inner sleeve (14) and having a width (b) that corresponds, at least to the length (L) of the cellular wheel (10);
(b) position the lamellas (16) at predetermined locations in predetermined quantities on one side of the first sheet metal strip (26) perpendicular to the sheet metal surface and perpendicular to the longitudinal direction of the first sheet metal strip (26) and connect the lamellas (16) to the first sheet metal strip (26) by welding or soldering;
(c) connect a first end of the first sheet metal strip (26) provided on one side with the lamellas (16) to the flange sleeve (15) by welding or soldering, roll up the first sheet metal strip (26) onto the flange sleeve (15), wherein, proceeding from the first end connected to the flange sleeve (15), the first sheet metal strip (26) is connected at regular intervals to the flange sleeve (15) by welding or soldering to form the inner sleeve (14);
(d) prepare a second sheet metal strip (26) having a length (1) that corresponds at least to the length of a circumferential line of the first intermediate sleeve (18) and having a width (b) that corresponds at least to the length (L) of the cellular wheel (10);
(e) position the lamellas (16) at predetermined locations in predetermined quantities on one side of the second sheet metal strip (26) perpendicular to the sheet metal surface and perpendicular to the longitudinal direction of the second sheet metal strip (26) and connect the lamellas (16) to the second sheet metal strip (26) by welding or soldering;
(f) connect a first end of the second sheet metal strip (26) provided on one side with the lamellas (16) to a free end of a first lamella (16) of the first sheet metal strip (26) forming the inner sleeve (14) by welding or soldering, roll up the second sheet metal strip (26) onto the free ends of the lamellas (16) of the inner sleeve (14), wherein, proceeding from the first end connected to the free end of the first lamella (16) of the inner sleeve (14), the second sheet metal strip (26) is connected at regular intervals to the free ends of the lamellas (16) of the inner sleeve (14) by welding or soldering to form the first intermediate sleeve (18);
(g) where applicable, repeat steps (d)-(f) to form at least one further intermediate sleeve (18) and connect the free ends of the lamellas (16) of the first intermediate sleeve (18) to the second intermediate sleeve (18), and in the case of there being more than two intermediate sleeves (18) connect the free ends of the lamellas (16) of each preceding intermediate sleeve (18) to the following intermediate sleeve (18) by welding or soldering;
(h) prepare a third sheet metal strip (26) having a length (l) that corresponds at least to the length of a circumferential line of the outer sleeve (12) and having a width (b) that corresponds at least to the length (L) of the cellular wheel (10);
(i) connect a first end of the third sheet metal strip (26) to a free end of a first lamella (16) of the first sheet metal strip (26) forming the outermost intermediate sleeve (18) by welding or soldering, roll up the third sheet metal strip (26) onto the free ends of the lamellas (16) of the outermost intermediate sleeve (18), wherein, proceeding from the first end connected to the free end of the first lamella (16) of the outermost intermediate sleeve (18), the third sheet metal strip (26) is connected at regular intervals to the free ends of the lamellas (16) of the outermost intermediate sleeve (18) by welding or soldering to form the outer sleeve (12).

6. The method as claimed in one of claims 1 to 5, **characterized in that** the connecting of the lamellas (16) to the sheet metal strips (26), to the outer sleeve (12), to the inner sleeve (14) and/or to the intermediate sleeve (18) is carried out by welding the parts by means of a laser or electron beam (30).

7. The method as claimed in one of claims 1 to 6, **characterized in that** the positioning of the lamellas (16) onto the sheet metal strip (26) is carried out by means of a numerically-controlled clamping device (28).

8. The method as claimed in one of claims. 1 to 7, **characterized in that** the sheet metal strip (26) is tensioned in a curved manner for the positioning of the lamellas (16) and connecting to the sheet metal strip (26) and the positioning of the lamellas (16) is carried out on the side of the sheet metal strip (26) with the convex curvature.

9. The method as claimed in one of claims 1 to 8, **characterized in that** the wall thickness of the materials used to produce the cellular wheel is less than 0.5 mm, in particular less than 0.3 mm, preferably a maximum of 0.2 mm.

## Revendications

1. Procédé de fabrication d'une roue cellulaire (10) en métal, comprenant une douille extérieure (12) cylindrique reposant symétriquement par rapport à un axe de rotation (y), une douille intérieure (14) cylindrique reposant de manière concentrique par rapport à la douille extérieure (12), au moins une douille intermédiaire (18) cylindrique entre la douille extérieure (12) et la douille intérieure (14) et agencée de manière concentrique par rapport à celles-ci, sachant que des lamelles (16) dirigées radialement par rapport à l'axe de rotation (y) sont disposées entre la douille extérieure (12) et la douille intermédiaire (18) et entre la douille intermédiaire (18) et la douille intérieure (14) ainsi qu'entre des douilles intermédiaires (18) successives si plusieurs douilles intermédiaires (18), **caractérisé par** les étapes suivantes à effectuer l'une après l'autre
(a1) préparation d'une première bande de tôle (26) avec une longueur (1) correspondant au moins à la longueur d'une ligne de pourtour de la douille intérieure (14) et avec une largeur (b) correspondant au moins à la longueur (L) de la roue cellulaire (10);
(b1) mise en place des lamelles (16) en des points prédéfinis en nombre prédéfini sur un côté de la première bande de tôle (26) perpendiculairement à la surface de la tôle et perpendiculairement au sens longitudinal de la première bande de tôle (26) et liaison des lamelles (16) à la première bande de tôle (26) par soudage ou brasage ;
(c1) cintrage de la première bande de tôle (26) dotée des lamelles (16) sur un côté et liaison des deux extrémités de la bande de tôle (26) par soudage ou brasage en formant la douille intérieure (14) ; ou
(a2) préparation d'une première bande de tôle (26) et liaison des deux extrémités de la première bande de tôle (26) par soudage ou brasage en formant la douille intérieure (14), ou préparation d'une douille tubulaire en tant que douille intérieure (14) ;
(b2) mise en place des lamelles (16) en des points prédéfinis en nombre prédéfini dans des plans axiaux sur le côté extérieur de la douille intérieure (14) ;
(c2) liaison des lamelles (16) à la douille intérieure (14) par soudage ou brasage ;
(d1) préparation d'une deuxième bande de tôle (26) avec une longueur (1) correspondant au moins à la longueur d'une ligne de pourtour de la première douille intermédiaire (18) et avec une largeur (b) correspondant au moins à la longueur (L) de la roue cellulaire (10) ;
(e1) mise en place des lamelles (16) en des points prédéfinis en nombre prédéfini sur un côté de la deuxième bande de tôle (26) perpendiculairement à la surface de la tôle et perpendiculairement au sens longitudinal de la deuxième bande de tôle (26) et liaison des lamelles (16) à la deuxième bande de tôle (26) par soudage ou brasage ;
(f1) cintrage de la deuxième bande de tôle (26) dotée des lamelles (16) sur un côté et liaison des deux extrémités de la deuxième bande de tôle (26) par soudage ou brasage en formant la première douille intermédiaire (18) ; ou
(d2) préparation d'une deuxième bande de tôle (26) et liaison des deux extrémités de la deuxième bande de tôle (26) par soudage ou brasage en formant la première douille intermédiaire (18), ou préparation d'une douille tubulaire en tant que douille intermédiaire (18) ;
(e2) mise en place des lamelles (16) en des points prédéfinis en nombre prédéfini dans des plans axiaux sur le côté extérieur de la première douille intermédiaire (18) ;
(f2) liaison des lamelles (16) à la première douille intermédiaire (18) par soudage ou brasage ;
(g) mise en place de la première douille intermédiaire (18) et liaison des extrémités libres des lamelles (16) de la douille intérieure (14) à la première douille intermédiaire (18) par soudage ou brasage ;
(h) le cas échéant, répétition des étapes (d1) - (f1) ou (d2) - (f2) en formant au moins une douille intermédiaire (18) supplémentaire et liaison des extrémités libres des lamelles (16) de la première douille intermédiaire (18) à la deuxième douille intermédiaire (18), et si plusieurs douilles intermédiaires (18), liaison des extrémités libres des lamelles (16) de chaque douille intermédiaire (18) précédente à la douille intermédiaire (18) suivante par soudage ou brasage ;
(i) mise en place d'une douille tubulaire concentrique par rapport à la douille intermédiaire (18) en tant que douille extérieure (12) et liaison des extrémités libres des lamelles (16) de la douille intermédiaire (18) la plus extérieure à la douille extérieure (12) par soudage ou brasage.

2. Procédé de fabrication d'une roue cellulaire (10) en métal, comprenant une douille extérieure (12) cylindrique reposant symétriquement par rapport à un axe de rotation (y), une douille intérieure (14) cylindrique reposant de manière concentrique par rapport à la douille extérieure (12), au moins une douille intermédiaire (18) cylindrique entre la douille extérieure (12) et la douille intérieure (14) et agencée de manière concentrique par rapport à celles-ci, sachant que des lamelles (16) dirigées radialement par rapport à l'axe de rotation (y) sont disposées entre la douille extérieure (12) et la douille intermédiaire (18) et entre la douille intermédiaire (18) et la douille intérieure (14) ainsi qu'entre des douilles intermédiaires (18) successives si plusieurs douilles intermédiaires (18), **caractérisé par** les étapes suivantes à effectuer l'une après l'autre
(a) préparation d'une bande de tôle (26) avec une longueur (l) correspondant au moins à la longueur d'une ligne de pourtour de la douille intermédiaire (18) et avec une largeur (b) correspondant au moins à la longueur (L) de la roue cellulaire (10) ;
(b) mise en place des lamelles (16) en des points prédéfinis en nombre prédéfini sur les deux côtés de la bande de tôle (26) perpendiculairement à la surface de la tôle et perpendiculairement au sens longitudinal de la bande de tôle (26) et liaison des lamelles (16) à la bande de tôle (26) par soudage ou brasage ;
(c) cintrage de la bande de tôle (26) dotée des lamelles (16) sur les deux côtés et liaison des deux extrémités de la bande de tôle (26) par soudage ou brasage en formant la douille intermédiaire (18) ;
(d) mise en place d'une première douille tubulaire concentrique par rapport à la douille intermédiaire (18) en tant que douille extérieure (12) et d'une deuxième douille tubulaire concentrique par rapport à la douille intermédiaire (18) en tant que douille intérieure (14) et liaison des extrémités libres des lamelles (16) à la douille extérieure (12) respectivement à la douille intérieure (14) par soudage ou brasage.

3. Procédé selon la revendication 1 ou 2, **caractérisé en ce qu'**avant de placer la douille extérieure (12), la douille intérieure (14) et la/les douille(s) intermédiaire(s) (18), les extrémités libres des lamelles (16) sont enlevées via des rouleaux abrasifs (36, 38), jusqu'à ce que les extrémités libres des lamelles (16) reposent sur une enveloppe de cylindre correspondant à la face intérieure de la douille extérieure (12), à la face extérieure de la douille intérieure (14) ou à la face intérieure de la/les douille(s) intermédiaire(s) (18).

4. Procédé selon l'une des revendications 1 à 3, **caractérisé en ce que** la liaison des lamelles (16) à la bande de tôle (26), à la douille extérieure (12), à la douille intérieure (14) et/ou à la douille intermédiaire (18) s'effectue par brasage des pièces via une lame à braser (17) sous forme d'une bande latérale pliée et revêtue d'une brasure et s'étendant sur la longueur des lamelles (16).

5. Procédé de fabrication d'une roue cellulaire (10) en métal, comprenant une douille extérieure (12) cylindrique reposant symétriquement par rapport à un axe de rotation (y), une douille intérieure (14) cylindrique agencée sur une douille à bride (15) cylindrique, reposant de manière concentrique par rapport à la douille extérieure (12), au moins une douille intermédiaire (18) cylindrique entre douille extérieure (12) et la douille intérieure (14) et agencée de manière concentrique par rapport à celles-ci, sachant que des lamelles (16) dirigées radialement par rapport à l'axe de rotation (y) sont disposées entre la douille extérieure (12) et la douille intermédiaire (18) et entre la douille intermédiaires (18) et la douille intérieure (14) ainsi qu'entre des douilles intermédiaires (18) successives si plusieurs douilles intermédiaires (18), **caractérisé par** les étapes suivantes à effectuer l'une après l'autre
(a) préparation d'une première bande de tôle (26) avec une longueur (1) correspondant au moins à la longueur d'une ligne de pourtour de la douille intérieure (14) et avec une largeur (b) correspondant au moins à la longueur (L) de la roue cellulaire (10) ;
(b) mise en place des lamelles (16) en des points prédéfinis en nombre prédéfini sur un côté de la première bande de tôle (26) perpendiculairement à la surface de la tôle et perpendiculairement au sens longitudinal de la première bande de tôle (26) et liaison des lamelles (16) à la première bande de tôle (26) par soudage ou brasage ;
(c) liaison d'une première extrémité de la première bande de tôle (26), dotée des lamelles (16) sur un côté, à la douille à collerette (15) par soudage ou brasage, enroulement de la première bande de tôle (26) sur la douille à collerette (15), sachant que, partant de la première extrémité liée à la douille à collerette (15), la première bande de tôle (26) est reliée à distances régulières à la douille à collerette (15) par soudage ou brasage en formant la douille intérieure (14) ;
(d) préparation d'une deuxième bande de tôle (26) avec une longueur (1) correspondant au moins à la longueur d'une ligne de pourtour de la première douille intermédiaire (18) et avec une largeur (b) correspondant au moins à la longueur (L) de la roue cellulaire (10) ;
(e) mise en place des lamelles (16) en des points prédéfinis en nombre prédéfini sur un côté de la deuxième bande de tôle (26) perpendiculairement à la surface de la tôle et perpendiculairement au sens longitudinal de la deuxième bande de tôle (26) et liaison des lamelles (16) à la deuxième bande de tôle (26) par soudage ou brasage ;
(f) liaison d'une première extrémité de la deuxième bande de tôle (26), dotée des lamelles (16) sur un côté, à une extrémité libre d'une première lamelle (16) de la première bande de tôle (26) formant la douille intérieure (14), par soudage ou brasage, enroulement de la deuxième bande de tôle (26) sur les extrémités libres des lamelles-(16) de la douille intérieure (14), sachant qu'en partant de la première extrémité liée à l'extrémité libre de la première lamelle (16) de la douille intérieure (14), la deuxième bande de tôle (26) est reliée à distances régulières aux extrémités libres des lamelles (16) de la douille intérieure (14) par soudage ou brasage en formant la première douille intermédiaire (18) ;
(g) le cas échéant, répétition des étapes (d)-(f) en formant au moins une douille intermédiaire (18) supplémentaire et liaison des extrémités libres des lamelles (16) de la première douille intermédiaire (18) à la deuxième douille intermédiaire (18), et si plusieurs douilles intermédiaires (18), liaison des extrémités libres des lamelles (16) de chaque douille intermédiaire (18) précédente à la douille intermédiaire (18) suivante par soudage ou brasage ;
(h) préparation d'une troisième bande de tôle (26) avec une longueur (l) correspondant au moins à la longueur d'une ligne de pourtour de la douille extérieure (12) et avec une largeur (b) correspondant au moins à la longueur (L) de la roue cellulaire (10) ;
(i) liaison d'une première extrémité de la troisième bande de tôle (26) à une extrémité libre d'une première lamelle (16) de la première bande de tôle (26) formant la douille intermédiaire (18) la plus extérieure par soudage ou brasage, enroulement de la troisième bande de tôle (26) sur les extrémités libres des lamelles (16) de la douille intermédiaire (18) la plus extérieure, sachant que partant de la première extrémité reliée à l'extrémité libre de la première lamelle (16) de la douille intermédiaire (18) la plus extérieure, la troisième bande de tôle (26) est reliée à distances régulières aux extrémités libres des lamelles (16) de la douille intermédiaire (18) la plus extérieure par soudage ou brasage en formant la douille extérieure (12).

6. Procédé selon l'une des revendications 1 à 5, **caractérisé en ce que** la liaison des lamelles (16) à la bande de tôle (26), à la douille extérieure (12), à la douille intérieure (14) et/ou à la douille intermédiaire (18) s'effectue par soudage des pièces via un faisceau laser ou d'électrons (30).

7. Procédé selon l'une des revendications 1 à 6, **caractérisé en ce que** la mise en place des lamelles (16) sur la bande de tôle (26) s'effectue via un dispositif de serrage à CN (28).

8. Procédé selon l'une des revendications 1 à 7, **caractérisé en ce que** la bande de tôle (26) est fixée en étant courbée pour la mise en place des lamelles (16) et la liaison avec la bande de tôle (26) et la mise en place des lamelles (16) est effectuée sur le côté de la bande de tôle (26) avec la courbure convexe.

9. Procédé selon l'une des revendications 1 à 8, **caractérisé en ce que** l'épaisseur de paroi des matériaux employés pour fabriquer la roue cellulaire est inférieure à 0,5 mm, en particulier inférieure à 0,3 mm, de préférence de 0,2 mm max.
